# EUROPÄISCHE PATENTSCHRIFT

(11) **EP 0 321 873 B1**
(45) Veröffentlichungstag und Bekanntmachung des Hinweises auf die Patenterteilung: **03.08.1994**
(21) Anmeldenummer: 88121075.1
(22) Anmeldetag: 16.12.1988
(51) Int. Cl.: F16H 3/00, F16H 3/10

(54) **Doppelkupplungsgetriebe und Verfahren zu seiner Einstellung**
Dual clutch transmission and its adjustment method
Transmission à embrayage double et méthode pour son ajustage

(30) Priorität: 19.12.1987 DE 3743228; 14.04.1988 DE 3812327; 14.04.1988 DE 3812359
(43) Veröffentlichungstag der Anmeldung: 28.06.1989
(73) Patentinhaber: GETRAG Getriebe- und Zahnradfabrik Hermann Hagenmeyer GmbH & Cie, D-71636 Ludwigsburg (DE)
(72) Erfinder: Rühle, Günter, D-7120 Bietigheim-Bissingen (DE); Wolf, Walter, Dr., D-7000 Stuttgart 80 (DE); Seufert, Martin, D-7250 Leonberg (DE)
(74) Vertreter: Witte, Alexander, Dr.-Ing.

(56) Entgegenhaltungen:
- EP-A- 0 087 681
- CH-A- 259 012
- DE-A- 1 655 663
- DE-A- 2 805 544
- DE-A- 3 546 454
- DE-A- 3 721 214
- DE-C- 844 542
- DE-C- 967 545
- DE-C- 3 140 259
- FR-A- 986 458
- GB-A- 2 044 372
- GB-A- 2 122 703
- US-A- 2 205 832
- US-A- 4 462 490

## Beschreibung

Die Erfindung betrifft ein Doppelkupplungsgetriebe mit einer Eingangswelle und einer Ausgangswelle, die über stirnradverzahnte und selektiv in Eingriff bringbare Zahnradpaare miteinander verbindbar sind, mit einer ersten und einer zweiten Kupplung, deren erste Kupplungshälften drehstarr mit der Eingangswelle und deren zweite Kupplungshälften mit einer Welle bzw. einer die Welle umgebenden Hohlwelle verbunden sind, und mit Schaltmitteln zum wechselweisen Betätigen der Kupplungen, um den Kraftfluß zwischen Eingangs- und Ausgangswelle alternativ über die erste Kupplung, die Welle und einen ersten Satz Zahnradpaare oder über die zweite Kupplung, die Hohlwelle und einen zweiten Satz Zahnradpaare zu führen, wobei in die über die Kupplungen laufenden Kraftflüsse Freiläufe eingeschaltet sind, derart, daß in jedem Gang jeweils ein Freilauf in den Kraftfluß eingeschaltet und der jeweils andere Freilauf nicht eingeschaltet ist, und die Freiläufe über Betätigungseinrichtungen in ihrer Freilauffunktion ein- bzw. ausschaltbar sind, weiterhin einer der Freiläufe zwischen die zweite Kupplungshälfe der ersten Kupplung und die Welle geschaltet ist, und ferner in jeden über die Kupplungen laufenden Kraftfluß jeweils nur ein gemeinsamer Freilauf eingeschaltet ist, der mit einer drehstarren Verbindung überbrückbar ist, wobei weiterhin die Verbindung eine zum Freilauf konzentrische dritte Kupplung aufweist, die axial betätigbar ist.

Die Erfindung betrifft ferner ein Verfahren zum Einstellen eines Doppelkupplungsgetriebes mit einer Eingangswelle und einer Ausgangswelle, die über stirnradverzahnte und selektiv in Eingriff bringbare Zahnradpaare miteinander verbindbar sind, mit einer ersten und einer zweiten Kupplung, deren erste Kupplungshälften drehstarr mit der Eingangswelle und deren zweite Kupplungshälften mit einer Welle bzw. einer die Welle umgebenden Hohlwelle verbunden sind, und mit Schaltmitteln zum Betätigen der Kupplungen, um den Kraftfluß zwischen Eingangs- und Ausgangswelle in einem Gang über die erste Kupplung, die Welle, Schaltmuffen und einen ersten Satz Zahnradpaare bzw. in einem benachbarten Gang über die zweite Kupplung, die Hohlwelle, Schaltmuffen und einen zweiten Satz Zahnradpaare zu führen.

Ein Doppelkupplungsgetriebe der vorstehend genannten Art ist aus dem Dokument EP-A-87 681 bekannt.

Bei dem bekannten Doppelkupplungsgetriebe ist die Eingangswelle mit einem glockenartigen Umlaufteil drehstarr verbunden, das in seinem Inneren zwei axial nebeneinanderliegende Kupplungen aufweist, die separat schaltbar sind. Eine der Kupplungen arbeitet auf eine Welle des Getriebes und die zweite Kupplung auf eine dazu koaxiale Hohlwelle. Die Hohlwelle treibt über ein Zahnradpaar eine zur Welle parallele Vorgelegewelle an. Beide Kupplungen sind jeweils mit Freiläufen versehen, die in das glockenartige Umlaufteil integriert sind. Dabei sind beide Freiläufe mittels Überbrückungskupplungen überbrückbar, die koaxial zu den Freiläufen und benachbart zu den eingangs genannten Kupplungen angeordnet sind. Auf diese Weise sind in das glockenartige Umlaufteil insgesamt vier Kupplungen integriert, nämlich die beiden eingangs erwähnten Kupplungen zum Antreiben der Welle bzw. der Hohlwelle und die beiden noch erwähnten Überbrückungskupplungen für die Freiläufe.

Ein weiteres Getriebe der vorstehend genannten Art ist aus dem Dokument DE-A-16 55 663 bekannt. Bei diesem bekannten Getriebe sind ebenfalls überbrückbare Freiläufe vorgesehen. Über die Ausgestaltung und Anordnung der Freiläufe ist in dem Dokument nichts näher angegeben.

Ein weiteres Doppelkupplungsgetriebe der hier interessierenden Art ist aus dem Dokument CH-A-259 012 bekannt.

Bei diesem bekannten Doppelkupplungsgetriebe ist die Eingangswelle mit einem glockenartigen Umlaufteil drehstarr verbunden, das in seinem Inneren zwei axial nebeneinanderliegende Kupplungen aufweist, die separat schaltbar sind. Eine der Kupplungen arbeitet auf eine Welle des Getriebes und die zweite Kupplung auf eine dazu koaxiale Hohlwelle. Die Hohlwelle treibt über ein Zahnradpaar eine zur Welle parallele Vorgelegewelle an. Die Welle treibt über zwei Freiläufe und ein Zahnradpaar ebenfalls die Vorgelegewelle an. Weitere Zahnradpaare wirken zwischen der in Verlängerung der Welle angeordneten Ausgangswelle einerseits und der Vorgelegewelle andererseits.

Dieses bekannte Doppelkupplungsgetriebe ist dann hinsichtlich des Schaltkomforts noch nicht optimal, wenn bei starrer Einstellung der Schaltzeiten unterschiedliche Schaltarten ausgeführt werden. So unterscheidet man bekanntlich zwischen insgesamt vier Schaltarten, nämlich zwischen Hoch- und Rückschalten einerseits und zwischen Last- und Schubschaltungen andererseits. Je nachdem, ob hoch- oder rückgeschaltet werden soll und ob der jeweilige Schaltvorgang unter einer Zugbedingung oder Schubbedingung ablaufen soll, ergibt sich eine unterschiedliche Kinematik der beteiligten Getriebeteile.

So ist bei einer Zug-Hochschaltung, also beispielsweise bei beschleunigender Fahrt in der Ebene oder bei einer Bergauffahrt beispielsweise die Motordrehzahl beim Einlegen des nächst höheren Ganges höher als die mit der Übersetzung des höheren Ganges übersetzte Abtriebsdrehzahl. Beim Schließen der Kupplung wird also der Motor durch den Abtrieb abgebremst, was zu einem Schaltruck führt. Beim Schub-Rückschalten hingegen wird der Motor vor dem Öffnen der Kupplung vom Abtrieb mitgeschleppt und sinkt in der Drehzahl wegen des in Leerlaufstellung befindlichen Fahrpedals beim Schalten schnell ab, während die Antriebsdrehzahl durch die höhere Übersetzung des nächst niedrigeren Ganges ansteigt. In diesem Falle wird der Motor beim Schließen der Kupplung im nächst niedrigeren Gang beschleunigt, was sich ebenfalls in einem Schaltruck bemerkbar macht.

Bei dem bekannten Doppelkupplungsgetriebe wird der Schaltruck nicht in allen Betriebszuständen hinreichend niedrig gehalten.

Obwohl beim bekannten Doppelkupplungsgetriebe im zweiten Gang beide Kupplungen betätigt werden, wird beim Anfahren das Getriebe so eingestellt, daß der jeweils niedrigste einzulegende Gang bei geöffneter zugehöriger Kupplung zunächst durch Betätigen der entsprechenden Schaltmuffen eingelegt und dann die eine zugehörige Kupplung der Doppelkupplung geschlossen wird. Beim Schließen der Kupplung, insbesondere beim Anfahren des Kraftfahrzeugs laufen also die beiden Kupplungshälften der sich schließenden Kupplung mit einer Relativdrehzahl zueinander, wobei durch die Momentenübergabe vom Motor auf den Abtrieb während der Schließphase der Kupplung in den reibschlüssigen Kupplungsbelägen eine beträchtliche Energie in Wärme umgesetzt wird, bis schließlich die beiden Kupplungshälften dieselbe Drehzahl angenommen haben und die Kupplung jetzt unter vollem Kraftschluß als drehstarre, kraftschlüssige Verbindung umläuft.

Die vorliegende Betrachtung gilt besonders gravierend beim Anfahren unter extremen Zugbedingungen, wie sie beim Bergauf-Anfahren eines voll beladenen Kraftfahrzeuges an einer Steilstrecke auftreten. In diesem Fall muß nämlich die Drehzahldifferenz des zunächst stehenden Abtriebes zur Motordrehzahl überwunden werden, wobei beim Anfahren am Berg der Antriebsmotor über die Leerlaufdrehzahl hinaus beschleunigt werden muß, damit der Motor nicht abgewürgt wird. Bei derartigen Anfahrvorgängen oder auch bei besonders rasantem Anfahren in der Ebene wird daher eine beträchtliche Energie in den Reibbelägen der Kupplung in Wärme umgesetzt. Dies führt entweder bei einer normal dimensionierten Kupplung zu frühzeitigem Kupplungsverschleiß oder aber es muß, um auch solche extremen Betriebsfälle zu berücksichtigen, eine besonders großvolumige Kupplung mit entsprechend groß dimensionierten Kupplungsflächen vorgesehen werden, um den genannten frühzeitigen Verschleiß zu vermeiden.

Aus der DE-A-35 46 454 ist ein Gangschaltgetriebe für ein Kraftfahrzeug mit Doppelkupplung bekannt. Dieses bekannt Getriebe stimmt eingangsseitig mit dem Getriebe der vorliegenden Anmeldung überein, weil auch dort die Eingangswelle wahlweise mit einer von zwei hintereinanderliegenden, benachbarten Kupplungen in Reibschluß bringbar ist und die beiden Kupplungen auf eine Welle bzw. eine dazu konzentrische Hohlwelle arbeiten. Bei dem bekannten Gangschaltgetriebe soll eine Überhitzung der Kupplungsbeläge beim Anfahren des Kraftfahrzeuges dadurch verhindert werden, daß beim Anfahren des Kraftfahrzeuges beide Kupplungsscheiben gemeinsam benutzt werden. Bei dem bekannten Getriebe wird dies dadurch erreicht, daß die Hohlwelle und die Zentralwelle durch eine dazwischen angeordnete, schaltbare Kupplung drehfest miteinander verbindbar sind. Mit dem bekannten Getriebe ist es daher zwar möglich, das Anfahrmoment auf beide Kupplungsscheiben zu verteilen, allerdings setzt dies eine spezielle Konfiguration des Getriebes voraus, bei der eine reibschlüssige Verbindung zwischen Zentralwelle und Hohlwelle eingestellt werden kann, ohne daß Getriebeteile einander verklemmen oder überdreht werden.

Aus der DE-A-844 542 ist ein Freilauftrieb für Kraftfahrzeuge bekannt, bei dem eine Freilaufnabe in eine Kupplungsscheibe integriert ist.

Aus der US-A-2 205 832 ist ein Doppelkupplungsgetriebe mit Vorgelegewelle bekannt, bei dem Zahnräder auf der Vorgelegewelle über einen Freilauf angeordnet sind.

Ein weiteres Doppelkupplungsgetriebe mit Vorgelegewelle, bei dem Freiläufe verwendet werden, ist in der DE-A-967 545 beschrieben.

Aus der DE-A-28 05 544 sowie der DE-A-31 40 259 sind Schaltungsanordnungen bekannt, bei denen mittels Drehzahlsensoren Eingangs- und Ausgangsdrehzahlen von Kupplungen gemessen werden und aus den Signalen ein Stellsignal ermittelt wird, um die Kupplung zu betätigen.

Der Erfindung liegt daher die Aufgabe zugrunde, ein Doppelkupplungsgetriebe sowie ein Verfahren der eingangs genannten Art dahingehend weiterzubilden, daß eine axial kurze, d.h. raumsparende Bauweise mit entsprechendem Raumgewinn möglich wird, wobei die Freiläufe und deren Überbrückungskupplungen leicht zugänglich sein sollen und dennoch extreme Anfahrvorgänge oder sonstige Gangwechsel mit hoher Kupplungsbelastung bei hohem Schaltkomfort möglich werden.

Diese Aufgabe wird erfindungsgemäß dadurch gelöst, daß die axiale Betätigungskraft über ein in die Welle integriertes Getriebe mit radialen Übertragsungsgliedern in eine axial gerichtete, aber außerhalb der Achse der Welle bzw. Vorgelegewelle an der dritten Kupplung angreifende Auslenkkraft umgesetzt wird.

Gemäß dem eingangs genannten Verfahren wird diese Aufgabe dadurch gelöst, daß beim Anfahren des Kraftfahrzeuges die zugehörige eine Kupplung und eine zugehörige Schaltmuffe des einen Ganges und gleichzeitig die andere Kupplung und eine Schaltmuffe eines weiteren, der anderen Kupplung zugehörigen Ganges betätigt werden und daß dann, wenn die Ausgangsdrehzahl der Kupplung eines der Gänge deren Eingangsdrehzahl erreicht, der Kraftfluß in diesem Gang aufgetrennt wird.

Die der Erfindung zugrundeliegende Aufgabe wird auf diese Weise vollkommen gelöst, weil durch die Einschaltung von jeweils einem aktivierbaren Freilauf in jedem Gang eine erhebliche Komfortverbesserung möglich ist, insbesondere wenn beim Schließen der Kupplung des neuen Ganges eine niedrigere bzw. höhere Drehzahl des Motors in der ersten Kupplungshälfte auf eine höhere bzw. niedrigere Drehzahl des Abtriebs in der zweiten Kupplungshälfte trifft. In diesen Fällen bewirkt im Zugbetrieb der Freilauf, daß das Motor-Drehmoment behutsam in den Abtrieb eingeleitet wird, sobald sich die Drehzahlen der Freilaufkörper aneinander angeglichen haben, während ein ruckartiges Beschleunigen des Motors und damit eine Minderung des Fahrkomforts vermieden wird.

Die erfindungsgemäße Vorrichtung hat den Vorteil, daß gegenüber dem eingangs genannten, bekannten Doppelkupplungsgetriebe ein zusätzlicher Bauraum im Bereich der Doppelkupplung vermieden wird, weil die Freiläufe samt den Überbrückungskupplungen in die Welle integriert sind. Damit entsteht eine äußerst raumsparende Konstruktion. Dadurch, daß die Freiläufe am Wellenende angeordnet sind, sind diese und auch die Überbrückungskupplungen leicht zugänglich. Ferner hat die Erfindung den Vorteil, daß durch Einschaltung des Getriebes eine Kraftverstärkung bei geringst möglichen Auslenkbeträgen möglich ist, so daß auch hohe Kupplungs-Schließkräfte durch verhältnismäßig kleine axiale Betätigungskräfte am Kolben überbrückt werden können.

Bei dem erfindungsgemäßen Verfahren macht man sich in an sich bekannter Weise die Tatsache zunutze, daß bei einem Doppelkupplungsgetriebe bauartbedingt bereits zwei Kupplungen vorgesehen sind, wobei die Kupplungsflächen beider Kupplungen gleichzeitig herangezogen werden, um die beim Anfahren des Fahrzeuges entstehende Wärmeenergie aufzunehmen. Hierzu werden jedoch im Gegensatz zu dem aus der DE-A-35 46 454 bekannten Getriebe zwei Gänge gleichzeitig eingelegt, nämlich zum einen der jeweils zum Anfahren des Kraftfahrzeuges einzulegende Gang, beispielsweise der erste Gang oder ein Kriechgang sowie gleichzeitig der jeweils nächst höhere Gang, d.h. der zweite Gang oder, bei Einschalten des Kriechganges der erste Gang und es wird die beim Anfahren in den Kupplungsbelägen umzusetzende Energie auf die beiden Kupplungen verteilt, die für diesen Vorgang beide geschlossen werden müssen, weil bei Doppelkupplungsgetrieben der hier interessierenden Art die Kraftflußverteilung in den einzelnen Gängen so gewählt ist, daß die beiden Kupplungen der Doppelkupplung in benachbarten Gängen jeweils abwechselnd ein- und ausgeschaltet werden. Erst dann, wenn z. B. an der Kupplung des jeweils nächst niedrigeren Ganges Drehzahlgleichheit eintritt und bei weiterer Erhöhung der Drehzahl dieser Kupplung über die Antriebsdrehzahl hinaus eine Momementenzirkulation im Getriebe selbst auftreten würde, wird der Kraftfluß im nächst niedrigeren Gang wieder aufgetrennt und für den Rest des Umschaltvorganges nur noch die Kupplung des jeweils einzuschaltenden Ganges beaufschlagt.

Bei der Erfindung ist ein Ausführungsbeispiel besonders bevorzugt, bei dem die Hohlwelle über ein Zahnradpaar eine Vorgelegewelle antreibt und ein zweiter Freilauf zwischen das mit der Vorgelegewelle koaxiale Zahnrad des Zahnradpaares und die Vorgelegewelle geschaltet ist.

Diese Maßnahme hat nämlich den Vorteil, daß der zweite Freilauf am Ende der Vorgelegewelle angeordnet und daher vom äußeren des Getriebes her leicht zugänglich ist, was zum einen konstruktive Vorteile mit sich bringt, andererseits aber auch eine Einflußnahme auf den Freilauf gestattet.

Bevorzugt ist bei diesem und dem weiter oben genannten Ausführungsbeispiel, bei dem ein erster Freilauf zwischen die zweite Kupplungshälfte der ersten Kupplung und die Welle geschaltet ist, wenn der Freilauf am stirnseitigen Ende der Welle bzw. der Vorgelegewelle angeordnet ist.

Diese Maßnahme hat den Vorteil, daß der Freilauf durch seine Positionierung am axialen Ende der Welle bzw. Vorgelegewelle leicht zugänglich ist und dort Betätigungseinheiten und dgl. angebracht werden können.

Bei einer bevorzugten Weiterbildung der Erfindung wird die Federkraft von einer zur dritten Kupplung konzentrischen Tellerfeder erzeugt.

Auch diese Maßnahme hat den Vorteil, daß sie zu einer axial kurzen Bauweise des Getriebes beiträgt.

Besonders bevorzugt sind Ausführungsbeispiele, bei denen die dritte Kupplung mittels eines axial in einer Längsbohrung der Welle bzw. Vorgelegewelle verschieblichen Kolbens betätigbar ist.

Diese Maßnahme hat den Vorteil, daß eine Fremdbetätigung der Kupplung in verschiedener Weise möglich ist, weil der Kolben hydraulisch, pneumatisch, elektromagnetisch oder dgl. fernsteuerbar ist. Die axiale Positionierung des Kolbens hat den Vorteil, daß mittels einer punktweisen Anlage oder einer Betätigungseinrichtung unter Rollreibung auch ein rotierender verschieblicher Kolben axial ausgelenkt werden kann, so daß eine Betätigung der dritten Kupplung und damit eine Überbrückung des Freilaufs von einem Getriebe festen Punkt aus vorgenommen werden kann, obwohl die dritte Kupplung mit dem Freilauf umläuft, wenn der Freilauf drehstarr überbrückt ist.

Bei einer Variante der Erfindung umfaßt das Getriebe einen zweiarmigen Hebel, dessen eines Ende vom Kolben ausgelenkt wird und dessen anderes Ende eine Hälfte der dritten Kupplung axial auslenkt.

Diese Maßnahme hat den Vorteil, daß infolge der Hebelwirkung auf konstruktiv einfachem Wege eine Umsetzung der axialen Betätigungsbewegung in eine ebenfalls axiale Auslenkbewegung bei der gewünschten Kraftübersetzung möglich ist.

Bei einer anderen Variante weist das Getriebe ein radial bewegliches Element auf, dessen eines Ende über eine erste Keilfläche am Kolben und dessen anderes Ende über eine zweite Keilfläche an einer Hälfte der dritten Kupplung anliegt.

Diese Maßnahme hat den Vorteil, daß durch entsprechende Wahl der Neigungswinkel der Keilflächen eine gewünschte Kräfteübersetzung eingestellt werden kann, wobei der Bewegungsablauf infolge der rein radialen Bewegung des Elements einfacher ist als bei dem zuvor genannten Ausführungsbeispiel, bei dem der Hebel sich in einer Ebene und nicht nur entlang einer radialen Richtung bewegt.

Bevorzugt ist im letztgenannten Fall, wenn das radial bewegliche Element ein Bolzen mit Konussen an den Enden ist, die an einem Konus des Kolbens bzw. an einer Schrägfläche der Hälfte der dritten Kupplung anliegen.

Diese Maßnahme hat den Vorteil, daß der Bolzen z.B. als Zylinderbolzen besonders einfach geführt werden kann.

Bei weiteren Ausführungsbeispielen der Erfindung ist der Kolben seinerseits mittels einer Kolben-Zylinder-Einheit auslenkbar.

Diese Maßnahme hat den Vorteil, daß auf hydraulischem Wege im gehäusefesten Teil oder auch im umlaufenden Teil des Getriebes eine erste Bewegung erzeugt werden kann, die dann auf die rotierenden Elemente der Kupplung übertragen werden kann.

Bei einer ersten Variante dieser Ausführungsbeispiele ist die Kolben-Zylinder-Einheit mittels dynamischer Druckölzuführung auslenkbar.

Diese Maßnahme eignet sich besonders für die Fälle, in denen die Kolben-Zylinder-Einheit in einem rotierenden Bereich des Getriebes untergebracht ist, in welchem Falle durch dynamische Druckölzuführung die erforderliche Betätigungskraft aufgebracht wird.

Bei einer anderen Variante dieser Ausführungsbeispiele ist die Kolben-Zylinder-Einheit mittels statischer Druckölzuführung auslenkbar.

Diese Variante der Erfindung eignet sich besonders für die Falle, in denen die Kolben-Zylinder-Einheit im gehäusefesten Bereich des Getriebes untergebracht ist, in welchem Falle durch statische Druckölzuführung die erforderliche Betätigungskraft aufgebracht wird.

Dies gilt vor allem bei einem Ausführungsbeispiel der Erfindung, bei dem die Kolben-Zylinder-Einheit gehäusefest angeordnet und der Zylinderkolben drehstarr gehalten ist und über Axiallager unter Rollreibung am Kolben axial anliegt.

Weitere Vorteile ergeben sich aus der Beschreibung und der beigefügten Zeichnung.

Ausführungsbeispiele der Erfindung sind in der Zeichnung dargestellt und werden in der nachfolgenden Beschreibung näher erläutert.

Es zeigen:
- Fig. 1: eine äußerst schematisierte Darstellung eines Ausführungsbeispiels eines erfindungsgemäßen Doppelkupplungsgetriebes;
- Fig. 2: in vergrößertem Maßstab und mit weiteren Einzelheiten den Eingangsbereich des in Fig. 1 dargestellten Doppelkupplungsgetriebes;
- Fig. 3: in noch weiter vergrößertem Maßstab eine erste Betätigungseinheit für einen Freilauf des in den Fig. 1 und 2 gezeigten Doppelkupplungsgetriebes;
- Fig. 4: einen noch weiter vergrößerten Ausschnitt aus Fig. 3 zur Erläuterung der Wirkungsweise der Betätigungseinheit des Freilaufs;
- Fig. 5: eine Darstellung, ähnlich Fig. 4, für eine andere Phase des Bewegungsablaufs der Betätigungseinheit;
- Fig. 6: eine Darstellung, ähnlich Fig. 3, jedoch für eine andere Betätigungseinheit eines weiteren Freilaufs des Doppelkupplungsgetriebes der Fig. 1 und 2;
- Fig. 7: eine Variante der Betätigungseinheit gemäß Fig. 3.
- Fig. 8: eine Darstellung, ähnlich der linken Hälfte von Fig. 1, jedoch für eine Variante der Erfindung, bei der die Freiläufe in abweichender Weise angeordnet sind;
- Fig. 9: eine weitere Variante zu Fig. 8;
- Fig. 10: noch eine Variante zu Fig. 8;
- Fig. 11: noch eine weitere Variante zu Fig. 8.
- Fig. 12: eine Darstellung, ähnlich Fig. 1, zur Erläuterung des erfindungsgemäßen Verfahrens bzw. der Wirkungsweise des erfindungsgemäßen Doppelkupplungsgetriebes;
- Fig. 13: den Verlauf von Drehzahlen über der Zeit zur Erläuterung des Verfahrens bzw. des Doppelkupplungsgetriebes gemäß Fig. 12;
- Fig. 14 bis 18: zeitliche Verläufe von Schaltsignalen zur weiteren Erläuterung des Verfahrens bzw. des Doppelkupplungsgetriebes gemäß Fig. 12;
- Fig. 19: eine Darstellung ähnlich Fig. 12 zur Erläuterung einer ersten Variante eines erfindungsgemäßen Doppelkupplungsgetriebes;
- Fig. 20: eine Darstellung ähnlich Fig. 19, zur Erläuterung einer weiteren Variante des erfindungsgemäßen Doppelkupplungsgetriebes.
(Die Ausführungen gemäß der Figuren 10, 11, 19 und 20 sind nicht Teil der Erfindung.)

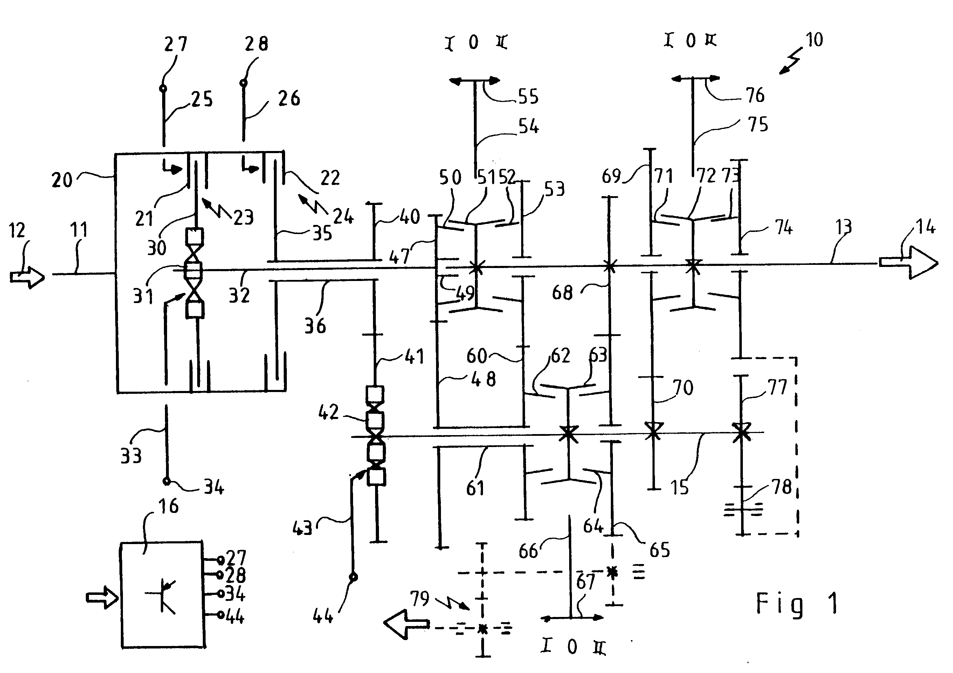

In Fig. 1 bezeichnet 10 als Ganzes ein Doppelkupplungsgetriebe, wie es in Kraftfahrzeugen, vorzugsweise in Pkw's, Verwendung findet. Das Doppelkupplungsgetriebe 10 verfügt über eine Eingangswelle 11, die mit einem in Fig. 1 nicht dargestellten Antriebsmotor des Kraftfahrzeugs verbunden ist. Mit einem Pfeil 12 ist symbolisiert, daß über die Eingangswelle 11 ein Drehmoment in das Doppelkupplungsgetriebe 10 vom Antriebsmotor her eingeleitet werden kann. Mit 13 ist eine Ausgangswelle des Doppelkupplungsgetriebes 10 bezeichnet, die an einen in Fig. 1 nicht gezeigten Abtrieb, beispielsweise an eine Kardanwelle des Kraftfahrzeugs angeschlossen ist. Mit einem Pfeil 14 ist symbolisiert, daß an der Ausgangswelle 13 ein Drehmoment vom Doppelkupplungsgetriebe 10 abgenommen werden kann. Schließlich ist mit 15 als weiteres wesentliches Element des Doppelkupplungsgetriebes 10 eine Vorgelegewelle bezeichnet.

Mit 16 ist in Fig. 1 ein Steuergerät äußerst schematisch angedeutet, dem eingangsseitig Gangschaltbefehle zugeführt werden und daß ausgangsseitig mit den Anschlüssen 27, 28, 34 und 44 zum Betätigen der Kupplungen 23 und 24 sowie der Freiläufe 31 und 42 versehen ist. Das Steuergerät 16 erzeugt in Abhängigkeit vom gewünschten Gangwechsel und ggf. auch in Abhängigkeit von den vorliegenden Betriebsparametern, beispielsweise dem Vorliegen einer Zug- oder einer Schubschaltung, dem Vorliegen einer Bergauf- oder Bergabfahrt und dgl. Schaltbefehle, um die Kupplungen 23, 24 in zeitlicher Überschneidung gegenläufig zu öffnen bzw. zu schließen und im Verlaufe der Schaltvorgänge die Freiläufe 31 und 42 für kürzere oder längere Zeit zu aktivieren.

Die Eingangswelle 11 ist drehstarr mit einem Umlaufteil 20 verbunden, das eine erste Kupplungshälfte 21 sowie eine erste Kupplungshälfte 22 einer ersten Kupplung 23 bzw. einer zweiten Kupplung 24 trägt. Eine erste Betätigungseinheit 25 ist für die erste Kupplung 23 und eine zweite Betätigungseinheit 26 ist für die zweite Kupplung 24 vorgesehen. Ein erster Anschluß 27 und ein zweiter Anschluß 28 sollen einen Drucköl-, Druckluft-oder Elektroanschluß symbolisieren, mit denen je nach Bauart des Doppelkupplungsgetriebes 10 die Kupplungen 23 und 24 betätigt werden können.

Eine zweite Kupplungshälfte 30 der ersten Kupplung 23 ist mit einem Außenumlaufteil eines ersten Freilaufs 31 verbunden, dessen Innenumlaufteil drehstarr auf einer Welle 32 sitzt. Eine dritte Betätigungseinheit 33 ist vorgesehen, um den ersten Freilauf 31 ein- und ausschalten zu können. Ein dritter Anschluß 34 dient zum hydraulischen, pneumatischen oder elektrischen Ansteuern der dritten Betätigungseinheit 33, je nach deren Bauweise. Durch Nicht-Beaufschlagen des dritten Anschlusses 34 ist die Welle 32 bei ausgeschaltetem erstem Freilauf 31 drehstarr mit der zweiten Kupplungshälfte 30 der ersten Kupplung 23 verbunden, während bei eingeschaltetem erstem Freilauf 31 von der zweiten Kupplungshälfte 30 ein Drehmoment auf die Welle 32 übertragen werden kann, die Welle 32 sich jedoch auch schneller als die zweite Kupplungshälfte 30 drehen kann.

Eine zweite Kupplungshälfte 35 der zweiten Kupplung 24 ist drehstarr mit einer ersten Hohlwelle 36 des Doppelkupplungsgetriebes 10 verbunden. Die erste Hohlwelle 36 umschließt die Welle 32. Die erste Hohlwelle 36 ist ferner drehstarr mit einem ersten Zahnrad 40 verbunden, das mit einem zweiten Zahnrad 41 kämmt. Das zweite Zahnrad 41 sitzt auf einem Außenumlaufkörper eines zweiten Freilaufs 42, dessen Innenumlaufkörper drehstarr auf der Vorgelegewelle 15 sitzt.

Eine vierte Betätigungseinheit 43 mit einem vierten Anschluß 44 ist zum Betätigen des zweiten Freilaufs 42 vorgesehen. Durch Ein- und Ausschalten des zweiten Freilaufs 42 kann somit das zweite Zahnrad 41 entweder in drehstarre Verbindung mit der Vorgelegewelle 15 gebracht werden (ausgeschalteter zweiter Freilauf 42) oder das zweite Zahnrad 41 vermag ein Drehmoment auf die Vorgelegewelle 15 zu übertragen, während diese jedoch auch schneller als das zweite Zahnrad 41 umlaufen kann (eingeschalteter zweiter Freilauf 42).

Ein drittes Zahnrad 47 sitzt drehstarr am rechten freien Ende der Welle 32 und kämmt mit einem vierten Zahnrad 48, das koaxial zur Vorgelegewelle 15 umläuft. Das dritte Zahnrad 47 ist mit einem Lager 49 versehen, in dem die Ausgangswelle 13 mit ihrem linken freien Ende drehbar gelagert ist.

Das dritte Zahnrad 47 ist mit einer weiteren Verzahnung 50 versehen, die mit einer ersten Schaltmuffe 51 verbindbar ist, wobei die erste Schaltmuffe 51 ferner mit einer Verzahnung 52 eines fünften Zahnrades 53 verbindbar ist, das drehbar auf der Ausgangswelle 13 angeordnet ist. Eine erste Schaltgabel 54 ist zum Betätigen der ersten Schaltmuffe 51 vorgesehen und in Richtung eines Pfeils 55 zwischen einer linken Stellung I, einer Mittelstellung 0 und einer rechten Stellung II schaltbar. In der Stellung I ist die mit der Ausgangswelle 13 drehstarr verbundene erste Schaltmuffe 51 formschlüssig mit der Verzahnung 50 des dritten Zahnrades 47 verbunden, während sie in der Stellung II mit der Verzahnung 52 des fünften Zahnrades 53 verbunden ist. In der Mittelstellung 0 befindet sich die erste Schaltmuffe 51 außer Eingriff mit den Verzahnungen 50 und 52.

Ein sechstes Zahnrad 60 sitzt auf einer zweiten Hohlwelle 61, die die Vorgelegewelle 15 umschließt und ebenfalls drehstarr mit dem vierten Zahnrad 48 verbunden ist. Das sechste Zahnrad 60 ist mit einer Verzahnung 62 versehen, die in formschlüssigen Eingriff mit einer zweiten Schaltmuffe 63 bringbar ist. Die zweite Schaltmuffe 63, die drehstarr mit der Vorgelegewelle 15 verbunden ist, kann ferner in Formschluß mit einer Verzahnung 64 eines siebten Zahnrades 65 gebracht werden, das drehbar auf der Vorgelegewelle 15 angeordnet ist. Die zweite Schaltmuffe 63 ist in der bereits zur ersten Schaltmuffe 51 beschriebenen Art mittels einer zweiten Schaltgabel 66 betätigbar, die in Richtung eines Pfeiles 67 ausgelenkt werden kann.

Ein achtes Zahnrad 68, das drehstarr mit der Ausgangswelle 13 verbunden ist, kämmt mit dem siebten Zahnrad 65.

Ein neuntes Zahnrad 69, das drehbar auf der Ausgangswelle 13 angeordnet ist, kämmt mit einem zehnten Zahnrad 70, das drehstarr auf der Vorgelegewelle 15 sitzt. Das neunte Zahnrad 69 weist eine Verzahnung 71 auf, die mit einer dritten Schaltmuffe 72 in Formschluß bringbar ist. Die dritte Schaltmuffe 72 ist ferner mit einer Verzahnung 73 eines elften Zahnrades 74 in Formschluß bringbar, das drehbar auf der Ausgangswelle 13 sitzt. Auch an der dritten Schaltmuffe 72 ist eine dritte Schaltgabel 75 angeordnet, die in Richtung eines Pfeils 76 betätigbar ist, wie bereits beschrieben wurde.

Ein zwölftes Zahnrad 77 sitzt drehstarr auf der Vorgelegewelle 15 und ist über ein Zwischenrad 78 zur Richtungsumkehr mit dem elften Zahnrad 74 im Eingriff.

Schließlich ist mit 79 angedeutet, daß das Getriebe 10 auch als Allradgetriebe ausgebildet sein kann.

Die Wirkungsweise des in Fig. 1 dargestellten Doppelkupplungsgetriebes 10 ist wie folgt:
Durch selektives Betätigen der Kupplungen 23 und 24 und durch selektives Betätigen der Schaltgabeln 54, 66 und 75 können sinnvoll insgesamt fünf Vorwärtsgänge, ein Rückwärtsgang sowie ein Kriechgang eingelegt werden.

Im ersten Gang ist die zweite Kupplung 24 geschlossen und die dritte Schaltgabel 75 in der linken Stellung I, während die Schaltgabeln 54 und 66 in der Neutralstellung sind. Der Kraftfluß führt nun von der Eingangswelle 11 über das Umlaufteil 20, die zweite Kupplung 24 auf die erste Hohlwelle 36 und von dort über das Radpaar 40/41 und den zweiten Freilauf 42 auf die Vorgelegewelle 15. Über das Radpaar 70/69 und die Verzahnung 71 führt der Kraftfluß dann weiter auf die Ausgangswelle 13.

Im zweiten Gang ist die erste Kupplung 23 geschlossen, und die erste Schaltgabel 54 befindet sich in der rechten Stellung II. Der Kraftfluß läuft nun von der Eingangswelle 11 über das Umlaufteil 20 und die erste Kupplung 23 auf den ersten Freilauf 31 und von dort auf die Welle 32. Über das Radpaar 47/48 wird die zweite Hohlwelle 61 angetrieben und damit auch das Radpaar 60/53. Über die Verzahnung 52 wird der Kraftfluß auf die Ausgangswelle 13 weitergeleitet.

Im dritten Gang ist die zweite Kupplung 24 geschlossen, und die zweite Schaltgabel 66 befindet sich in der rechten Schaltstellung II. Der Kraftfluß führt nun von der Eingangswelle 11 bzw. das Umlaufteil 20 und die zweite Kupplung 24 auf die erste Hohlwelle 36 und von dort auf das Radpaar 40/41. Über den zweiten Freilauf 42 gelangt das Drehmoment auf die Vorgelegewelle 15 und von dort über die dritte Schaltmuffe 63 und die Verzahnung 64 auf das Radpaar 65/68, das die Ausgangswelle 13 antreibt.

Im vierten Gang ist die erste Kupplung 23 geschlossen, und die erste Schaltgabel 54 befindet sich in der linken Stellung I. Der Kraftfluß führt nun von der Eingangswelle 11 über das Umlaufteil 20 und die erste Kupplung 23 auf den ersten Freilauf 31, der die Welle 32 antreibt. Über die Verzahnung 50 des dritten Zahnrades 47 und die erste Schaltmuffe 51 sind die Welle 32 und die Ausgangswelle 13 drehstarr miteinander gekoppelt, so daß in diesem Falle des eingeschalteten vierten Ganges die Eingangswelle 11 ohne weitere Übersetzung synchron mit der Ausgangswelle 13 umläuft.

Im fünften Gang ist die zweite Kupplung 24 geschlossen, und sowohl die erste Schaltgabel 54 wie die zweite Schaltgabel 66 befinden sich jeweils in der linken Stellung I.

Der Kraftfluß führt in diesem Falle von der Eingangswelle 11 über das Umlaufteil 20 und die zweite Kupplung 24 auf die erste Hohlwelle 36. Über das Radpaar 40/41 wird der zweite Freilauf 42 und damit die Vorgelegewelle 15 angetrieben. Über die zweite Schaltmuffe 63 und die Verzahnung 62 wird die zweite Hohlwelle 61 angetrieben, und der Kraftfluß kehrt über das Radpaar 48/47 wieder in die obere Hälfte des Getriebes 10 zurück, wo über die Verzahnung 50 und die erste Schaltmuffe 51 die Ausgangswelle 13 angetrieben wird.

Im Rückwärtsgang ist die zweite Kupplung 24 geschlossen, und die dritte Schaltgabel 75 befindet sich in der rechten Stellung II. Der Kraftfluß führt nun von der Eingangswelle 11 über das Umlaufteil 20 und die zweite Kupplung 24 auf die erste Hohlwelle 36 und von dort über das Radpaar 40/41 und den zweiten Freilauf 42 auf die Vorgelegewelle 15. Über das Radpaar 77/74 und das Zwischenrad 78 zur Drehrichtungsumkehr wird dann über die Verzahnung 73 und die dritte Schaltmuffe 72 die Ausgangswelle 13 in umgekehrter Drehrichtung angetrieben.

Schließlich ist im Kriechgang die erste Kupplung 23 geschlossen, und es befinden sich sowohl die zweite Schaltgabel 66 wie auch die dritte Schaltgabel 75 in der jeweils linken Stellung I. Der Kraftfluß führt nun von der Eingangswelle 11 über das Umlaufteil 20 auf die erste Kupplung 23 und von dort über den ersten Freilauf 31 auf die Welle 32. Das Radpaar 47/48 überträgt den Kraftfluß auf die zweite Hohlwelle 61, die über das sechste Zahnrad 60, die Verzahnung 62 und die zweite Schaltmuffe 63 die Vorgelegewelle 15 antreibt. Über das Radpaar 70/69 und die Verzahnung 71 in Verbindung mit der dritten Schaltmuffe 72 wird die Ausgangswelle 13 angetrieben.

Wie sich aus der vorstehenden Schilderung ergibt, ist bei jedem der eingeschalteten Gänge jeweils einer der Freiläufe 31 oder 42 in den Kraftfluß eingeschaltet, und zwar ist der erste Freilauf 31 im zweiten, vierten und im Kriechgang eingeschaltet, während der zweite Freilauf 42 im ersten, dritten, fünften und im Rückwärtsgang wirksam ist.

Wenn mit dem Doppelkupplungsgetriebe 10 beispielsweise eine Zug-Hochschaltung ohne Freilaufwirkung vorgenommen werden soll, z.B. bei Bergauf-Fahrt oder bei beschleunigender Fahrt in der Ebene, so wird z.B. vom ersten in den zweiten Gang hochgeschaltet, indem zunächst die zweite Kupplung 24 geöffnet und unter zeitlicher Überschneidung die erste Kupplung 23 geschlossen wird. Durch die zeitliche Überschneidung der Öffnung bzw. Schließung der Kupplungen 24 bzw. 23 wird in diesem Falle eine Hochschaltung ohne Zugkraftunterbrechung bewirkt. Bekanntlich kann bei der Betrachtung von Schaltvorgängen in Getrieben die Abtriebsdrehzahl näherungsweise als konstant angenommen werden, weil sie proportional zur Fahrgeschwindigkeit ist und die Fahrgeschwindigkeit sich innerhalb der kurzen Schaltzeiten nicht merklich ändert. Beim Hochschalten muß die Motordrehzahl, d.h. die Getriebeeingangsdrehzahl, von einem relativ hohen Wert beim Ausschalten des alten Ganges auf einen niedrigeren Wert zum synchronen Einschalten in den neuen, höheren Gang vermindert werden. Dies bedeutet, daß beim Zuschalten des neuen, höheren Ganges die ausgangsseitige Kupplungshälfte langsamer umläuft als die eingangsseitige Kupplungshälfte.

Bei dem genannten Beispielsfall der Zughochschaltung vom ersten in den zweiten Gang wird beim Zuschalten des zweiten Ganges die Welle 32 langsamer umlaufen als die mit dem Umlaufteil 20 verbundene erste Kupplungshälfte 21 der ersten Kupplung 23.

Vor dem Kupplungswechsel wird die Betätigungseinrichtung 43 des zweiten Freilaufs 42 aktiviert, so daß der zweite Freilauf 42 wirksam wird. Der erste Freilauf 31 bleibt in seiner Wirkung verriegelt und die erste Kupplung 23 wird geregelt geschlossen, während die zweite Kupplung 24 für die Dauer des Schaltvorganges geschlossen bleiben kann. Dadurch ist die exakte Übergabe des Kraftflusses von der Hohlwelle 36 auf die Welle 32 gewährleistet. Die Übergabe des Kraftflusses von der Hohlwelle 36 auf die Welle 32 folgt zu dem Zeitpunkt, in dem das zweite Zahnrad 41 und die Vorgelegewelle 15 ihren Synchronlauf aufgeben und die Vorgelegewelle 15 durch die niedrigere Übersetzung des zweiten Ganges eine höhere Drehzahl annimmt. Entsprechendes gilt für Zug-Hochschaltungen und Zug-Rückschaltungen in den anderen Gängen.

Im Falle einer Schub-Hochschaltung bzw. Schub-Rückschaltung kommen die Freiläufe nicht zur Wirkung, da sich hier die Kraftflußrichtung im Getriebe umkehrt. Die Auswirkungen auf den Schaltruck sind hier nicht so gravierend, da diese Schaltungen immer auf einem niedrigeren Drehzahlniveau durchgeführt werden.

Die Freiläufe 31 und 42 bewirken somit eine Erhöhung des Schaltkomforts durch Verminderung des Schaltrucks, insbesondere bei Zug-Hochschaltungen und Zug-Rückschaltungen, und zwar für jeden Gang des Doppelkupplungsgetriebes 10, weil infolge der Bauart des Doppelkupplungsgetriebes 10 beim Umschalten von einem Gang in den jeweils benachbarten Gang jeweils vom einen Freilauf auf den anderen Freilauf umgeschaltet wird.

Die Wirkung der Freiläufe 31, 42 kann andererseits aber auch wieder aufgehoben werden, indem die Betätigungseinheiten 33 bzw. 43 betätigt werden. Dies ist vor allem dann erwünscht, wenn im Schubbetrieb die Motorbremswirkung ausgenutzt werden soll, was eine drehstarre Verbindung zwischen Motor und Abtrieb voraussetzt. Wie weiter unten noch beschrieben werden wird, können die Freiläufe 31 und 42 wahlfrei ein- und ausgeschaltet werden, so daß das Doppelkupplungsgetriebe 10 nach unterschiedlichen, an sich bekannten Gesichtspunkten betrieben werden kann. So ist beispielsweise eine Betriebsart des Doppelkupplungsgetriebes 10 denkbar, bei der die Freiläufe 31, 42 zwecks Erzielung einer Treibstoffersparnis immer wirksam geschaltet sind, solange nicht die Betriebsbremse betätigt wird oder beispielsweise das Fahrzeug bergab fährt. In einer anderen Betriebsart können aber die Freiläufe 31, 42 nur jeweils während der Schaltvorgänge des Doppelkupplungsgetriebes 10 aktiviert werden, während sie nach Abschluß der Schaltvorgänge jeweils wieder ausgeschaltet werden, so daß außerhalb von Schaltvorgängen stets eine drehstarre Verbindung zwischen Motor und Abtrieb vorliegt.

Es versteht sich, daß auch Mischformen dieser Betriebsarten möglich sind, je nachdem, wie dies im Einzelfall gewünscht ist.

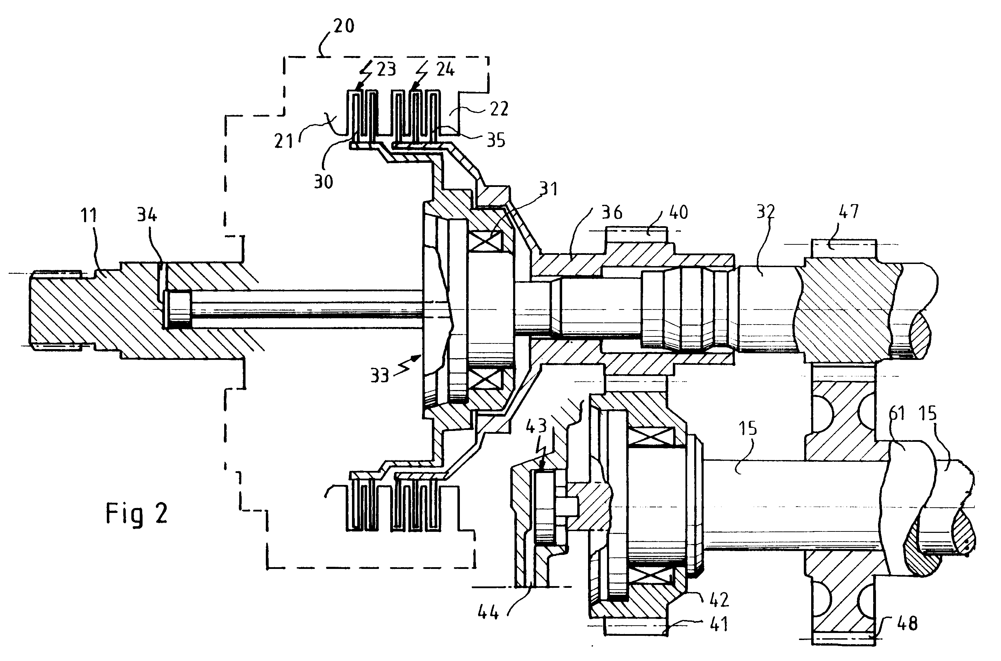

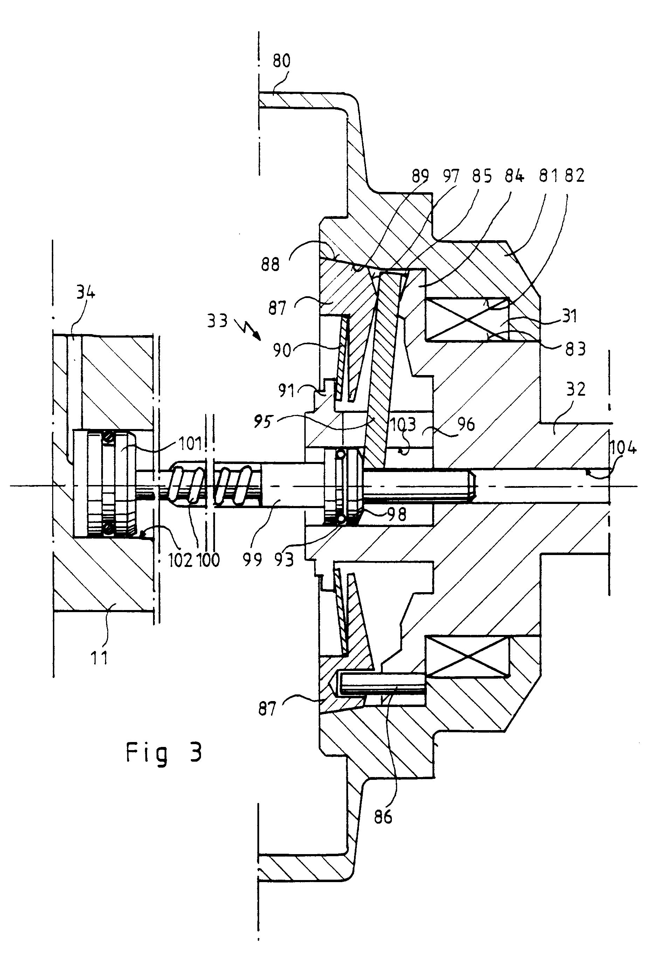

Fig. 2 zeigt den Eingangsbereich des Doppelkupplungsgetriebes 10 bis hin zum Radpaar 47/48, um weitere Einzelheiten sowie die bauliche Anordnung der Kupplungen 23, 24, der Freiläufe 31, 42 sowie der Betätigungseinheiten 33 und 43 zu veranschaulichen. Man erkennt aus Fig. 2 insbesondere, daß die erste Betätigungseinheit 33 des Freilaufs 31 eine Konuskupplung umfaßt, die mechanisch mittels einer axial verschiebbaren Stange betätigt wird. Einzelheiten hierzu werden weiter unten anhand der Figuren 3 bis 5 noch im einzelnen erläutert.

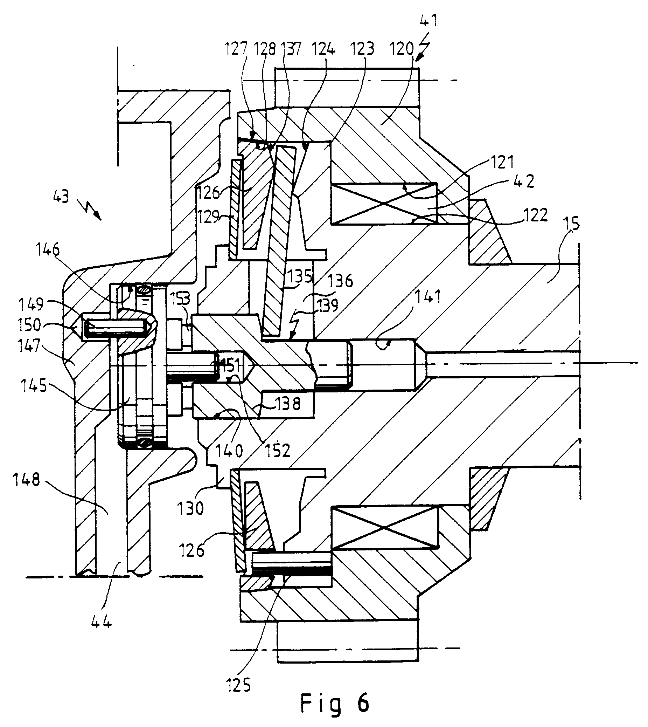

Die zweite Betätigungseinheit 43 für den zweiten Freilauf 42 weist eine bauähnliche Konuskupplung auf, die ebenfalls über einen Kolben betätigbar ist. Einzelheiten hierzu werden weiter unten anhand Fig. 6 beschrieben werden.

Fig. 3 zeigt die baulichen Einzelheiten der dritten Betätigungseinheit 33 für den ersten Freilauf 31.

Ein Lamellenträger 80 der ersten Kupplung 23 läuft zur Welle 32 hin in ein Glockenteil 81 aus. Das Glockenteil 81 weist eine erste, innen umlaufende Sitzfläche 82 auf, während die Welle 32 eine zweite, außen umlaufende Sitzfläche 83 aufweist. Zwischen den Sitzflächen 82, 83 ist der erste Freilauf 31 angeordnet, der von an sich bekannter Bauart ist und hier nicht näher beschrieben zu werden braucht. Der erste Freilauf 31 bewirkt, daß die Welle 32 mit höherer Drehzahl als das Glockenteil 81 umlaufen kann, während andererseits das Glockenteil 81 ein Drehmoment auf die dann mit gleicher Drehzahl umlaufende Welle 32 zu übertragen vermag.

Die dritte Betätigungseinheit 33 soll nun ermöglichen, die zuvor beschriebene Wirkung des ersten Freilaufs 31 auszuschalten, und zwar in der Weise, daß durch wahlfreie Ansteuerung das Glockenteil 81 auch in eine drehstarre Verbindung mit der Welle 32 bringbar ist. Hierzu läuft die Welle 32 in einen Ringflansch 84 aus, der an seinem Außenumfang mit einer schräg zu einer Radialebene geneigten Fläche 85 versehen ist. In der unteren Hälfte der Fig. 3 ist ein axialer Bolzen 86 erkennbar, von denen mehrere, z.B. drei, über den Umfang des Ringflanschs 84 verteilt angeordnet sind. Die Bolzen 86 sorgen für eine drehstarre Verbindung der Welle 32 mit einem Kegelkupplungsteil 87.

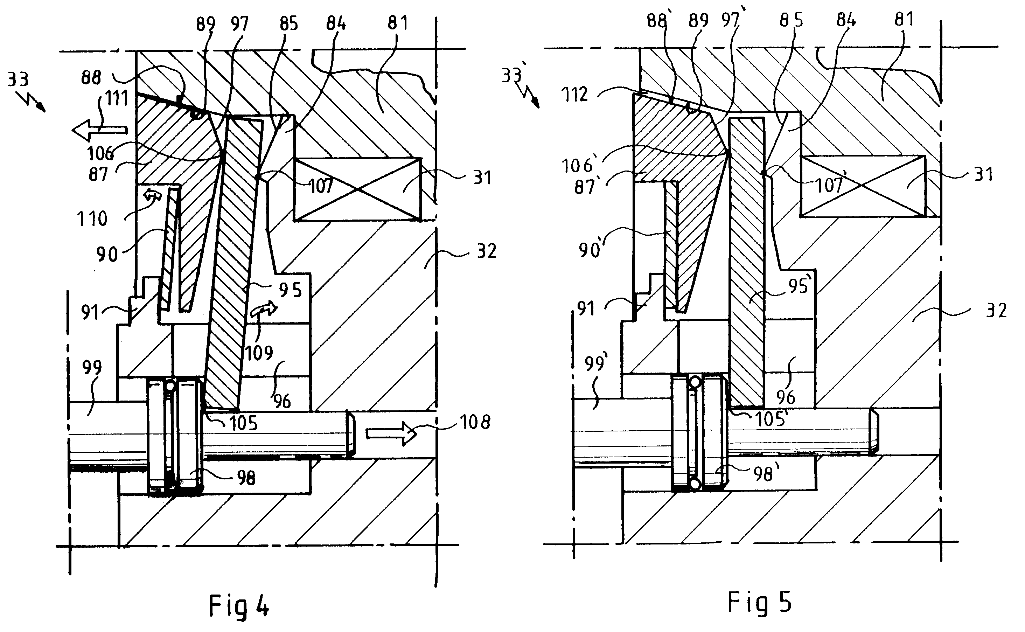

Das Kegelkupplungsteil 87 weist eine äußere, geringfügig zur Längsachse der Welle 32 geneigte äußere, erste konische Kupplungsfläche 88 auf, die in der Darstellung der Fig. 3 und 4 an einer zweiten, inneren konischen Kupplungsfläche 89 des Glockenteils 81 anliegt, wobei die zweite Kupplungsfläche 89 denselben Konuswinkel wie die erste Kupplungsfläche 88 aufweist.

In diese Stellung wird das Kegelkupplungsteil 87 unter der Wirkung einer Tellerfeder 90 gepreßt, die mit ihrem Außenumfang am Kegelkupplungsteil 87 und mit ihrem Innenumfang an einem axialen Anschlag 91 der Welle 32 anliegt.

Ein schräg zu einer Radialebene angestellter Hebel 95, oder mehrere über den Umfang der Welle 32 verteilte derartige Hebel 95 sind in einer Längsaussparung 96 der Welle 32 in axialer Richtung geringfügig verschieb- und verschwenkbar. Ein oberes Ende des Hebels 95 liegt mit seiner in Fig. 3 und 4 rechten Seite am unteren Rand der Fläche 85 an, während die linke Seite am unteren Ende einer Konusfläche 97 auf der rechten Seite des Kegelkupplungsteils 87 anliegt. Ein unteres Ende des Hebels 95 liegt an einem Kolben bzw. Bund 98 einer Kolbenstange 99 an, die in der Achse der Welle 32 verschiebbar ist. Die Kolbenstange 99 liegt über Axiallager 93 am Bund 98 an, so daß sich Kolbenstange 99 und Bund 98 unter Rollreibung gegeneinander verdrehen können.

Die Kolbenstange 99 wird mittels einer am linken Ende gehäusefest gehaltenen Feder 100 stets nach rechts in Fig. 3 und 4 gedrückt, um die zuvor beschriebenen Komponenten unter Vorspannung zu halten. Am linken Ende der Kolbenstange 99 ist ein Kolben 101 angeordnet, der dicht in einer axialen Zylinderbohrung 102 der Eingangswelle 11 läuft. Der Kolben 101 kann über den dritten Anschluß 34, der vorzugsweise als radialer Druckölanschluß ausgebildet und dynamisch mit Drucköl versorgbar ist, angesteuert werden. Der Bund 98 läuft in einem ersten Abschnitt 103, und ein rechtes, freies Ende der Kolbenstange 99 läuft in einem zweiten Abschnitt 104 einer axialen Zylinderbohrung in der Welle 32.

Die Wirkungsweise der dritten Betätigungseinheit 33 soll nun anhand von zwei Phasenbildern der Fig. 4 und 5 näher erläutert werden:
In Fig. 4 erkennt man nochmals in vergrößertem Maßstab den bereits zu Fig. 3 erläuterten Ausgangszustand, bei dem das Kegelkupplungsteil 87 mit seiner ersten konischen Kupplungsfläche 88 an der zweiten konischen Kupplungsfläche 89 des Glockenteils 81 anliegt. In dieser Stellung läuft das Kegelkupplungsteil 87 infolge des Reibschlusses im Bereich der Kupplungsflächen 88/89 drehstarr mit dem Glockenteil 81 um. Infolge der in Fig. 3 unten gezeigten Verbindung mit dem axialen Bolzen 86 folgt auch die Welle 32 drehstarr der Rotationsbewegung des Glockenteils 81, des Lamellenträgers 80 und damit der zweiten Kupplungshälfte 30 der ersten Kupplung 23. Der erste Freilauf 31 ist somit ausgeschaltet, d.h. durch Schließen der Kegelkupplung überbrückt.

In Fig. 4 ist eingezeichnet, daß der Hebel 95 an seinem unteren Ende in einem ersten Punkt 105, nämlich an der linken unteren Ecke einer Radialfläche des Bundes 98 anliegt. Das obere Ende des Hebels 95 liegt in einem zweiten Punkt 106 auf der linken Seite des Hebels 95 an einer unteren Kante der Konusfläche 97 des Kegelkupplungsteils 87 an, während die rechte Seite des Hebels 95 in einem dritten Punkt 107 am unteren Rand der Fläche 85 des Ringflanschs 84 anliegt. Der dritte Punkt 107 liegt näher zur Achse der Welle 32 als der zweite Punkt 106.

Wird nun über den in Fig. 3 eingezeichneten dritten Anschluß 34, vorzugsweise mittels dynamischer Zuführung, ein Drucköl auf die in Fig. 3 linke Seite des Kolbens 101 gebracht, wird die Kolbenstange 99 in Fig. 3 bis 5 nach rechts ausgelenkt, wie in Fig. 4 mit einem Pfeil 108 angedeutet. Infolge der Bewegung der Kolbenstange 99 und damit des Bundes 98 vollführt der Hebel 95 eine Schwenkbewegung in einer Axialebene, wobei der Punkt 107 das Zentrum der Schwenkbewegung ist. Der Hebel 95 verschwenkt sich in Richtung eines Pfeils 109 und drückt das Kegelkupplungsteil 87 nach links, so daß die Tellerfeder 90 in Richtung eines Pfeils 110 gespannt wird. Das Kegelkupplungsteil 87 wandert in Richtung eines Pfeils 111 axial aus.

Die Endstellung dieses Bewegungsablaufs ist in Fig. 5 dargestellt, wo die Bezugszeichen der lageveränderten Elemente jeweils mit einem Apostroph gekennzeichnet sind, während die in ihrer Lage unveränderten Elemente mit unveränderten Bezugszeichen versehen sind.

Man erkennt aus Fig. 5, daß der Hebel 95' sich nunmehr etwa in einer Radialebene befindet und daß die Tellerfeder 90' vollkommen gespannt ist. Das Kegelkupplungsteil 87' ist axial aus dem Glockenteil 81 nach links herausgetreten, so daß zwischen den Kupplungsflächen 88' und 89 ein Luftspalt 112 entstanden ist.

Die Kegelkupplung ist somit geöffnet und die Überbrückung des ersten Freilaufs 31 aufgehoben. Der erste Freilauf 31 ist infolgedessen wirksam, und die Welle 32 kann mit höherer Drehzahl umlaufen als das Glockenteil 81.

Fig. 6 zeigt weitere Einzelheiten der vierten Betätigungseinheit 43 für den zweiten Freilauf 42. Die Bauart der vierten Betätigungseinheit 43 entspricht weitgehend der Bauart der dritten Betätigungseinheit 33, die zuvor anhand der Fig. 3 bis 5 im einzelnen erläutert wurde.

Ein Zahnradkörper 120 des zweiten Zahnrades 41 ist mit einer ersten Sitzfläche 121 versehen, während die Vorgelegewelle 15 mit einer komplementären zweiten Sitzfläche 122 versehen ist. Zwischen den Sitzflächen 121, 122 ist der zweite Freilauf 42 angeordnet.

Die Vorgelegewelle 15 läuft an ihrem in Fig. 6 linken Ende in einen Ringflansch 123 aus, der mit einer Fläche 124 versehen ist. Ein oder mehrere Bolzen 125 sorgen für eine drehstarre Verbindung des Ringflanschs 123 mit einem Kegelkupplungsteil 126. Eine erste konische Kupplungsfläche 127 am Umfang des Kegelkupplungsteils 126 arbeitet mit einer zweiten konischen Kupplungsfläche 128 am Zahnradkörper 120 zusammen.

Eine Tellerfeder 129 drückt das Kegelkupplungsteil 126 von einem axialen Anschlag 130 der Vorgelegewelle 15 nach rechts, so daß im Ausgangszustand die Kupplungsflächen 127, 128 unter Reibschluß aneinander liegen.

Ein Hebel 135 ist in einer Längsaussparung 136 der Vorgelegewelle 15 in einer Axialebene verschwenkbar. Das obere Ende des Hebels 135 liegt rechts am unteren Ende der Fläche 124 des Ringflanschs 123 und links am unteren Ende der Konusfläche 137 des Kegelkupplungsteils 126 an. Das untere Ende des Hebels 135 liegt an einem Bund 138 eines Kolbens 139 an. Der Kolben 139 läuft koaxial zur Vorgelegewelle 15 in einem ersten Abschnitt 140 bzw. mit seinem rechten, freien Ende in einem zweiten, querschnittsreduzierten Abschnitt 141 einer Axialbohrung der Vorgelegewelle 15.

Ein weiterer Kolben 145 läuft koaxial zur Vorgelegewelle 15 in einer Bohrung 146 eines Getriebegehäuses 147. Mittels eines radialen Kanals 148, der zum vierten Anschluß 44 führt, kann ein Druckmittel, beispielsweise ein statisch zugeführtes Drucköl, auf die linke Stirnseite des Kolbens 145 gebracht werden. Der Kolben 145 ist mit einem axial ausgerichteten Bolzen 149 versehen, der über die linke Stirnfläche des Kolbens 145 vorsteht und in eine komplementäre Ausnehmung 150 im Getriebegehäuse 147 faßt, so daß der Kolben 145 drehstarr, jedoch axial beweglich, in der Zylinderbohrung 146 laufen kann.

Die rechte Stirnseite des Kolbens 145 ist mit einem zentrischen Zapfen 151 versehen, der in einer komplementären Sackbohrung 152 im Kolben 139 läuft. Die rechte Stirnseite des Kolbens 145 ist ferner mit Axiallagern 153 versehen, die an der linken Stirnseite des Kolbens 139 anliegen. Die Axiallager 153 sind beispielsweise als Rollenlager oder Kugellager ausgebildet, so daß der drehstarr gelagerte Kolben 145 lediglich unter Rollreibung an dem mit der Vorgelegewelle 15 umlaufenden Kolben 139 reibungsarm anliegt.

Wenn Drucköl in den Kanal 148 eingeleitet wird, wandert der Kolben 145 nach rechts aus und schiebt den Kolben 139 nach rechts vor sich her. Der Hebel 135 wird dann durch den Bund 138 verschwenkt, wobei der Bewegungsablauf des Hebels 135 dem Bewegungsablauf des Hebels 95 entspricht, wie dies weiter oben zu den Fig. 4 und 5 im einzelnen erläutert wurde, so daß zur Vermeidung von Wiederholungen hier darauf verzichtet werden kann.

Im Ergebnis wird bei Einleitung eines Drucköls in den Kanal 148 die durch die Kupplungsflächen 127, 128 gebildete Kegelkupplung geöffnet, so daß der zweite Freilauf 42 wirksam werden kann, während im drucklosen Zustand des Kanals 148 die Kegelkupplung unter der Wirkung der Tellerfeder 129 geschlossen ist und das zweite Zahnrad 41 in jenem Fall drehstarr mit der Vorgelegewelle 15 umläuft.

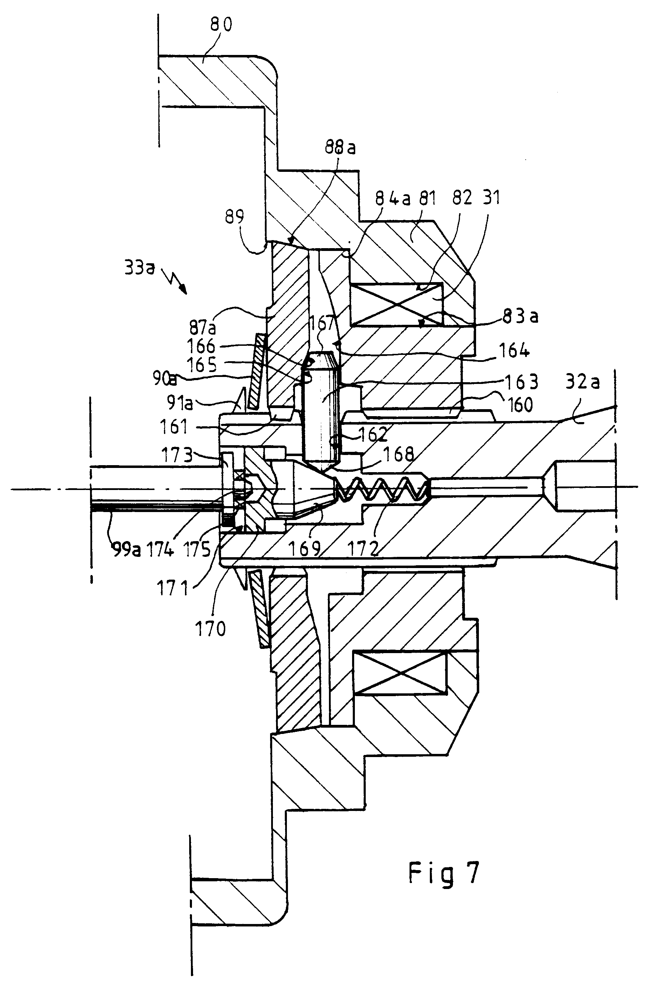

Fig. 7 zeigt schließlich noch eine Variante einer Betätigungseinheit 33a, wie sie alternativ zur Betätigungseinheit 33 der Fig. 3 bis 5, aber auch alternativ zur Betätigungseinheit 43 der Fig. 6, letzteres unter entsprechender Anpassung der Betätigungselemente, verwendet werden kann. In Fig. 7 sind Teile, die den zuvor anhand der Fig. 3 bis 6 geschilderten Ausführungsbeispielen entsprechen, mit denselben Bezugszeichen unter Hinzufügung eines "a" bezeichnet.

Die Abweichungen zu den Betätigungseinheiten 33 und 43 sind folgende:
Zunächst erkennt man aus Fig. 7, daß der Ringflansch 84a über eine erste Verzahnung 160 mit der Welle 32a drehstarr verbunden ist. Eine zweite Verzahnung 161 sorgt für eine drehstarre Verbindung der Welle 32a mit dem Kegelkupplungsteil 87a, so daß die in Fig. 3 erkennbare Verbindung mittels der Bolzen 86 entbehrlich ist.

Das linke freie Ende der Welle 32a ist vorzugsweise mit einer Mehrzahl von radialen Bohrungen 162 versehen, in denen ein oder mehrere, z.B. drei über den Umfang verteilte Bolzen 163 in radialer Richtung zur Welle 32a laufen können. Das obere freie Ende des Bolzens 163 wird in radialen Laufflächen geführt, und zwar in einer ersten Lauffläche 164 am Ringflansch 84a sowie einer zweiten Lauffläche 165 am Kegelkupplungsteil 87a. Diese zweite Lauffläche 165 geht nach oben in eine Schrägfläche 166 über, deren Neigungswinkel dem halben Konuswinkel eines ersten Konus 167 entspricht, in den der Bolzen 163 am oberen Ende ausläuft. Am unteren Ende läuft der Bolzen 163 in einen zweiten Konus 168 aus, der seinerseits an einem dritten Konus 169 eines axial verschiebbaren Kolbens 170 anliegt. Der Kolben 170 läuft in einer axialen Bohrung 171 der Welle 32a und wird zur Erzeugung einer Vorspannung von einer ebenfalls axial verlaufenden Wendelfeder 172 in Fig. 7 nach links gedrückt.

Die Kolbenstange 99a läuft an ihrem rechten Ende in einen scheibenförmigen Bund 173 aus, der mit einem zentralen, axialen Zapfen 174 versehen ist. Der Zapfen 174 führt ein Axiallager 175 zwischen der Scheibe 173 und dem Kolben 170.

Die Wirkungsweise der Betätigungseinheit 33a ist wie folgt:
In der in Fig. 7 gezeigten Ausgangsstellung wird das Kegelkupplungsteil 87a unter der Wirkung der Tellerfeder 90a nach rechts gedrückt, so daß die konischen Kupplungsflächen 88a und 89 unter Reibschluß aneinanderliegen. Infolge der zweiten Verzahnung 161 bedeutet dies eine drehstarre Verbindung von Glockenteil 81 und Welle 32a.

Wird nun die Kolbenstange 99a nach rechts ausgelenkt, gelangt der Bund 173 über das Axiallager 175 in Anlage an den Kolben 170 und schiebt diesen ebenfalls nach rechts. Auf dem dritten Konus 169 gleitet nun der zweite Konus 168 des Bolzens 163 und verschiebt diesen nach oben. Der erste Konus 167 drückt nun links gegen die Schrägfläche 166 und drückt das Kegelkupplungsteil 87a gegen die Wirkung der Tellerfeder 90a nach links. Die Kupplungsflächen 88a und 89 lösen sich infolgedessen voneinander, so daß zwischen diesen Flächen 88a, 89 ein Luftspalt entsteht, der den Reibschluß aufhebt.

Auf diese Weise stellt sich eine Wirkung ein, wie sie weiter oben zu Fig. 5 im einzelnen beschrieben wurde.

Es versteht sich, daß statt der Kolbenstange 99a in Fig. 7 auch eine Anordnung mit einem druckmittelbetätigten Kolben nach Art des Kolbens 145 in Fig. 6 eingesetzt werden kann, so daß die Betätigungseinheit 33a in entsprechender Weise auch für den zweiten Freilauf 42 eingesetzt werden kann.

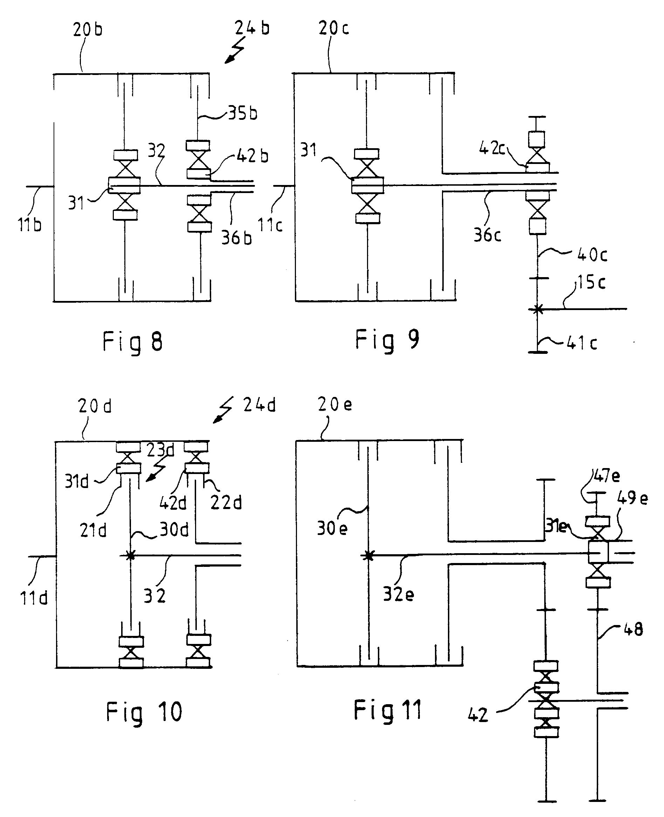

Die Fig. 8 bis 11 zeigen weitere Varianten hinsichtlich der Anordnung der Freiläufe 31, 42. Die abweichenden Elemente sind jeweils mit "b", "c", "d" bzw. "e" in Fig. 8 bis 11 bezeichnet.

In Fig. 8 ist die Anordnung des ersten Freilaufs 31 unverändert, während der zweite Freilauf 42b zwischen der zweiten Kupplungshälfte 35b der zweiten Kupplung 24b und der Hohlwelle 36b eingeschaltet ist.

Bei der Anordnung der Fig. 9 ist die Position des ersten Freilaufs 31 ebenfalls unverändert, während der zweite Freilauf 42c nunmehr zwischen Hohlwelle 36c und dem ersten Zahnrad 40c angeordnet ist, das mit dem nun drehstarr auf der Vorgelegewelle 15c angeordneten zweiten Zahnrad 41c kämmt.

Bei der dritten Variante der Fig. 10 sind beide Freiläufe 31d und 42d in die Doppelkupplung integriert und zwar sind sie zwischen dem Umlaufteil 20d und den ersten Kupplungshälften 21d bzw. 22d der ersten Kupplung 23d bzw. der zweiten Kupplung 24d angeorndet. In diesem Falle sitzt die zweite Kupplungshälfte 30d der ersten Kupplung 23d drehstarr auf der Welle 32.

Schließlich zeigt Fig. 11 eine vierte Variante, bei der der erste Freilauf 31e am rechten Ende der Welle 32e sitzt und mit seinem Außenumlaufkörper das dritte Zahnrad 47e trägt, während der Innenumlaufkörper des ersten Freilaufs 31e noch das Lager 49e trägt. Die Welle 32e ist auch in diesem Falle drehstarr mit der zweiten Kupplungshälfte 30e der ersten Kupplung 23 verbunden.

Den vorstehend geschilderten vier Varianten der Fig. 8 bis 11 ist gemeinsam, daß jeweils einer der Freiläufe 31 oder 42 in den Kraftfluß eingeschaltet ist, der von der ersten Kupplung 23 bzw. von der zweiten Kupplung 24 ausgeht. Die Frage, welcher dieser Varianten der Vorzug zu geben ist, hängt davon ab, ob größere Eingriffe im Bereich der Doppelkupplung (Fig. 8 und 10) oder im Bereich des Getriebes (Fig. 9 und insbesondere 11) gewünscht werden bzw. in welchem Umfange die Freiläufe 31 und 42 extern zugänglich sein sollen.

So ist die Anordnung, wie sie sich aus den Fig. 1 bis 7 ergibt, und bei der die Freiläufe 31, 42 an stirnseitigen Enden der Welle 32 bzw. der Vorgelegewelle 15 angeordnet sind, allerdings besonders bevorzugt, weil in diesen Fällen eine besonders einfache axiale Zugänglichkeit der Freiläufe 31 und 42 gegeben ist.

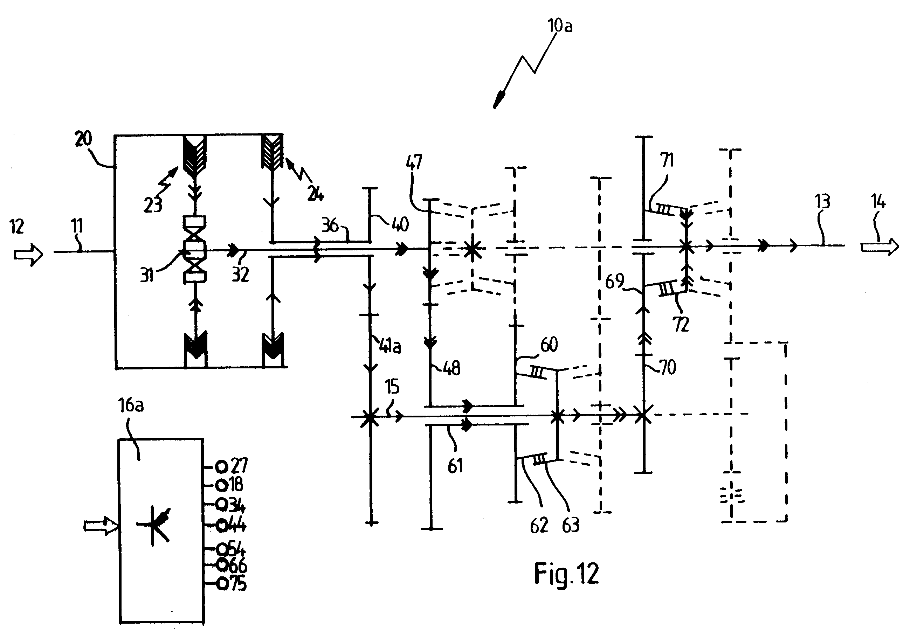

Fig. 12 zeigt nochmals das Getriebe gemäß Fig. 1, wobei der zweite Freilauf 42 in diesem Falle fortgelassen wurde, weil zur Erläuterung des nachstehend geschilderten Verfahrens eine Freilauffunktion an der Vorgelegewelle 15 nicht erforderlich ist, so daß in diesem Falle das zweite Zahnrad 41a drehstarr auf der Vorgelegewelle 15 sitzen kann.

Das Steuergerät 16a ist bei diesem Ausführungsbeispiel dadurch etwas modifiziert, daß auch Steuerausgänge "54", "66" und "75" vorgesehen sind, wodurch angedeutet werden soll, daß das Steuergerät 16a auch die Schaltgabeln 54, 66 und 75 betätigen können soll, also ein ferngesteuertes Betätigen der Schaltmuffen 51, 63 und 72 möglich ist. Es versteht sich, daß das Steuergerät 16a seine Steuer- bzw. Betätigungsfunktionen auf elektrischem, hydraulischem, pneumatischem oder sonstigem Wege vornehmen kann.

Wenn das mit dem Doppelkupplungsgetriebe 10a ausgerüstete Fahrzeug nach dem erfindungsgemäßen Verfahren angefahren werden soll, erzeugt das Steuergerät 16a an seinen Ausgängen Signale derart, daß beide Kupplungen 23 und 24 geschlossen werden, daß der erste Freilauf 31 aktiviert wird und daß die zweite Schaltmuffe 63 in die linke Position (I in Fig. 1) sowie die dritte Schaltmuffe 72 in die linke Position (I in Fig. 1) geschaltet wird.

Dies bedeutet, daß gleichzeitig der erste und der Kriechgang eingelegt sind. In Fig. 12 ist mit einem einfachen Pfeil in den Getriebeelementen der Kraftfluß des ersten Ganges über die Elemente 11 - 24 - 36 - 40 - 41a - 15 - 70 - 69 - 71 - 72 - 13 dargestellt, während mit einem Doppelpfeil der Kraftfluß im Kriechgang über die Elemente 11 - 23 - 31 - 32 - 47 - 48 - 61 - 60 - 62 - 63 - 15 - 70 - 69 - 71 - 72 - 13 bezeichnet ist.

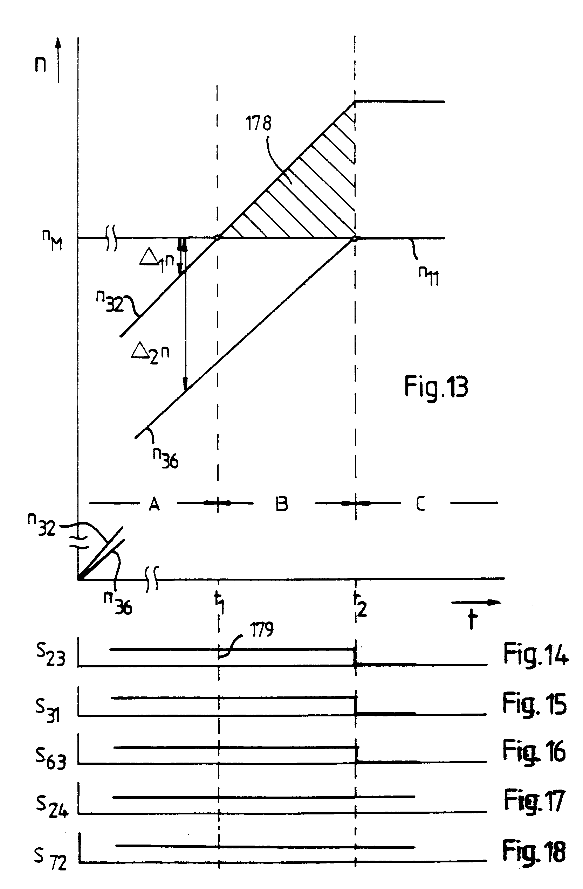

Die zugehörigen Verhältnisse sind in den Fig. 13 bis 18 gezeigt.

Fig. 13 zeigt einen Drehzahl (n)/Zeit (t)-Verlauf und man erkennt, daß die Motordrehzahl n_{M} bzw. n₁₁ konstant angenommen wird. Mit den jeweils auf positiven logischen Werten geschalteten Steuersignalen S₂₃, S₃₁, S₆₃, S₂₄ und S₇₂ ist angedeutet, daß die erste Kupplung 23, der erste Freilauf 31, die zweite Schaltmuffe 63 für den Kriechgang sowie die zweite Kupplung 24 und die dritte Schaltmuffe 72 für den ersten Gang eingeschaltet sind.

Infolge dieses Zustandes des Doppelkupplungsgetriebes 10a steigen die über die jeweilige Getriebeübersetzung von der Ausgangswelle 13 übersetzten Drehzahlen n₃₂ der Welle 32 sowie n₃₆ der ersten Hohlwelle 36 an. In diesem in Fig. 13 mit A bezeichneten Zeitbereich ergeben sich Drehzahldifferenzen Δ ₁n bzw. Δ ₂n zwischen der Welle 32 bzw. der ersten Hohlwelle 36 und der Eingangswelle 11 bzw. des Umlaufteils 20. Im Zeitbereich A schleifen also beide Kupplungen mit den genannten Drehzahldifferenzen Δ ₁n bzw. Δ ₂n und das Reibmoment wird folglich auf die Beläge beider Kupplungen 23 und 24 aufgeteilt.

Zum Zeitpunkt t₁ erreicht die höher übersetzte Drehzahl n₃₂ am Ausgang der ersten Kupplung 23 deren Eingangsdrehzahl n₁₁. Würde man nun die erste Kupplung 23 weiterhin geschlossen halten, so würde dies eine Zirkulation des Antriebsmomentes im Doppelkupplungsgetriebe 10a zur Folge haben, wobei über die Getriebeelemente des Kriechganges ein Teil des Antriebsmomentes auf die erste Kupplung 23 zurückfließen würde, die dann mit negativer Drehzahldifferenz Δ ₙ arbeiten würde.

Dieses unerwünschte Ergebnis wird dadurch vermieden, daß zum Zeitpunkt t₁ der erste Freilauf 31 wirksam wird, weil nun die Drehzahl n₃₂ der Welle 32 die Drehzahl n₁₁ des Umlaufteils 20 bzw. der ersten Kupplungshälfte der ersten Kupplung 23 übersteigt. In Fig. 13 ist der zugehörige Bereich schraffiert als Freilaufbereich 178 bezeichnet. Im zugehörigen Zeitbereich B ist somit für die Einkupplung des ersten Ganges nur die zweite Kupplung 24 verantwortlich, deren Ausgang, d.h. die erste Hohlwelle 36, mit der Drehzahl n₃₆ umläuft, die noch niedriger ist als die Antriebsdrehzahl n₁₁.

Erst zum Zeitpunkt t₂ erreicht die Drehzahl n₃₆ die Antriebsdrehzahl n₁₁, so daß in diesem Zeitpunkt t₂ der Einkuppelvorgang und damit der Anfahrvorgang beendet werden kann.

Im Diagramm der Schaltsignale S gemäß den Fig. 14 und 18 drückt sich dies dadurch aus, daß zum Zeitpunkt t₂ durch Abfall des Signals S₂₃ die erste Kupplung 23 bzw. durch Abfall der Signale S₃₁ und S₆₃ der erste Freilauf 31 sowie die zweite Schaltmuffe 63 ausgeschaltet werden können. Die Signale S₂₄ und S₇₂ für die zweite Kupplung 24 und die dritte Schaltmuffe 72 bleiben hingegen logisch positiv, weil der erste Gang eingeschaltet bleibt, bis dann später in einen noch höheren Gang umgeschaltet wird.

In Fig. 14 ist mit 179 angedeutet, daß nach einer Alternative zu dem vorstehend beschriebenen Vorgehen auch bereits zum Zeitpunkt t₁ die erste Kupplung 23 geöffnet werden kann, indem man das Signal S₂₃ zum Zeitpunkt t₁ auf Null absinken läßt. In diesem Falle würde der Kraftfluß des bis zum Zeitpunkt t₁ am Anfahrvorgang beteiligten Kriechganges bereits zum Zeitpunkt t₁ mechanisch aufgetrennt, so daß es eines Freilaufs 31 nicht bedarf, weil eine Zirkulation des Antriebsmoments auch durch Öffnen der ersten Kupplung 23 verhindert werden kann.

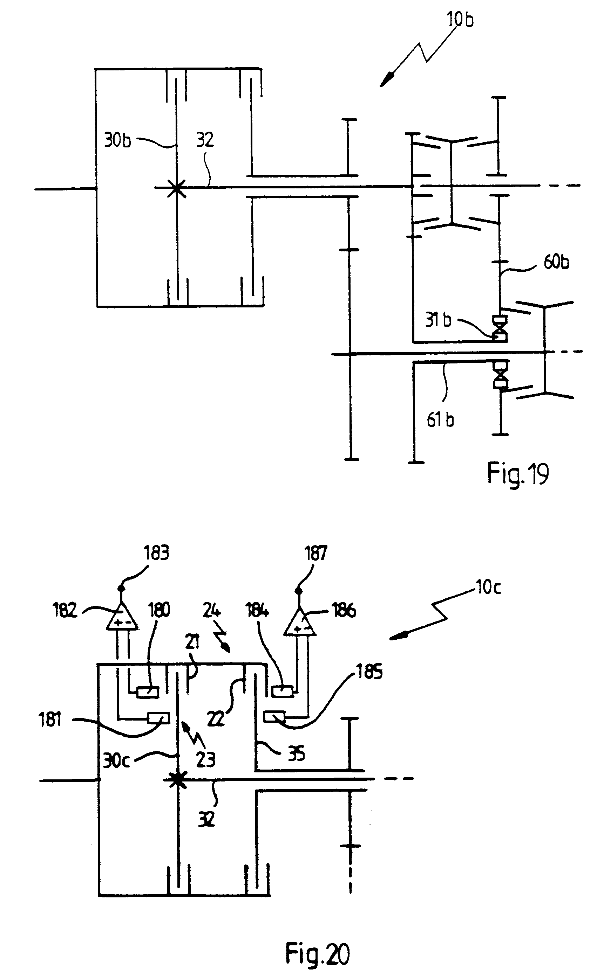

Fig. 19 zeigt eine Variante des Doppelkupplungsgetriebes 10 gemäß Fig. 1 bzw. 10a gemäß Fig. 12, bei der modifizierte Teile durch Hinzufügen eines "b" zum Bezugszeichen der Fig. 1 und 12 gekennzeichnet sind.

Man erkennt, daß die zweite Kupplungshälfte 30b der ersten Kupplung 23 ohne einen Freilauf, d.h. drehstarr, auf der Welle 32 sitzt. Allerdings ist in diesem Falle das sechste Zahnrad 60b so modifiziert, daß es über einen Freilauf 31b auf der zweiten Hohlwelle 61b sitzt.

Die Wirkung dieser Anordnung ist - mutatis mutandis - dieselbe, wie sie zuvor anhand der Fig. 12 erläutert wurde, weil auch beim Vorsehen des Freilaufs 31b im abtriebsseitigen Zahnrad 60b des Kriechganges die Wirkung erzielt wird, daß eine Zirkulation des Antriebsmoments im Doppelkupplungsgetriebe 10b ausgehend von der Vorgelegewelle 15 vermieden wird. Während beim Ausführungsbeispiel der Fig. 12 alle Getriebeteile des Kriechganges noch mit der höheren Drehzahl umlaufen und die Entkopplung des Kraftflusses erst im Bereich der ersten Kupplung 23 durch den ersten Freilauf 31 stattfindet, sind beim Ausführungsbeispiel der Fig. 15 die Getriebeteile des Kriechganges überhaupt nicht mehr eingeschaltet, weil bereits an der zweiten Hohlwelle 61b durch den jetzt vorgesehenen Freilauf 31b die Einleitung eines Moments von der Ausgangswelle 13 in die Getriebeteile des Kriechganges verhindert wird.

Fig. 20 zeigt eine weitere Variante des Doppelkupplungsgetriebes 10c, bei dem alle abweichenden Komponenten durch Hinzufügen eines "c" zum Bezugszeichen kenntlich gemacht sind.

Man erkennt, daß die zweite Kupplungshälfte 30c wiederum ohne Freilauf, d.h. drehstarr, auf der Welle 32 sitzt. Die Kupplungshälften 21 und 30c der ersten Kupplung 23 stehen mit Drehzahlsensoren 180, 181 in Verbindung, die ihrerseits an einen Komparator 182 mit Ausgangsanschluß 183 angeschlossen sind. Entsprechendes gilt für die Kupplungshälften 22, 35 der zweiten Kupplung 24, die mit Drehzahlsensoren 184, 185 in Verbindung stehen und es ist wiederum ein Komparator 186 mit Ausgangsanschluß 187 vorgesehen.

Es ist leicht einsehbar, daß bei dem ausführlich zu Fig. 12 erläuterten Fall des Anfahrens im ersten Gang mittels der Drehzahlsensoren 180, 181 die Differenzdrehzahl Δ ₁n und mittels der Drehzahlsensoren 184, 185 die Differenzdrehzahl Δ ₂n gemäß Fig. 13 erfaßt werden können.

Zum Zeitpunkt t₁ der Fig. 13 spricht der Komparator 182 mit seinem Ausgangsanschluß 183 an, während der Komparator 186 mit seinem Ausgangsanschluß 187 zum Zeitpunkt t₂ anspricht.

Verbindet man nun die Ausgangsanschlüsse 183 und 187 mit dem Steuergerät 16a, so können die mit 179 bezeichneten Schaltvorgänge in den in Fig. 14 und 16 bis 18 durchgeführt werden. Es kann also in Abhängigkeit vom Ausgangssignal des Komparators 182 zum Zeitpunkt t₁ die erste Kupplung 23 geöffnet und gleichzeitig die zweite Schaltmuffe 63 durch Betätigen der zweiten Schaltgabel 66 gelöst und dann der Kraftfluß im Kriechgang aufgetrennt werden. Bei Ansprechen des zweiten Komparators 186 kann hingegen das Ende des Rutschvorganges erkannt werden.

Es versteht sich, daß der grundsätzliche erfinderische Gedanke, beide Kupplungen eines Doppelkupplungsgetriebes gleichzeitig während eines Rutschvorganges einzusetzen, unabhängig von den zuvor geschilderten konkreten Ausführungsbeispielen ist. So ist eine Vielzahl von Varianten denkbar, wonach in einem Doppelkupplungsgetriebe selektiv Kraftflüsse ein- und ausgeschaltet werden können, um das gleichzeitige Wirksamwerden zweier Gänge und damit zweier Kupplungen zu bewirken bzw. wieder zu beenden.

Es versteht sich ferner, daß in der vorstehenden Erläuterung der Ausführungsbeispiele lediglich als bevorzugtes Ausführungsbeispiel auf den Vorgang des Anfahrens des Kraftfahrzeuges hingewiesen wurde, während offensichtlich ist, daß die erfinderischen Gedanken auch bei anderen Umschaltvorgängen im Getriebe eingesetzt werden können. Auch zum Herstellen eines Kriechganges, beispielsweise für eine Kriechfahrt in einem Stau kann in der beschriebenen Weise vorgegangen werden, indem gleichzeitig, nacheinander oder in abwechselnder Folge beide Kupplungen der Doppelkupplung beaufschlagt werden, um das Fahrzeug über längere Zeit im Reibbereich der Kupplungen betreiben zu können, ohne die Kupplungen thermisch und mechanisch zu überlasten.

Es versteht sich ferner, daß die vorstehend erläuterten Varianten des konstruktiven Aufbaus und der konstruktiven Anordnung der Freiläufe im Doppelkupplungsgetriebe ebenfalls erfindungswesentlich sind, in dem Ausmaße, wie die Funktion der Freiläufe für das erfindungsgemäße Verfahren bzw. erfindungsgemäße Doppelkupplungsgetriebe benötigt werden.

## Patentansprüche

1. Doppelkupplungsgetriebe mit einer Eingangswelle (11) und einer Ausgangswelle (13), die über stirnradverzahnte und selektiv in Eingriff bringbare Zahnradpaare (40/41, 47/48, 53/60, 68/65, 69/70, 74/77/78) miteinander verbindbar sind, mit einer ersten und einer zweiten Kupplung (23, 24), deren erste Kupplungshälften (21, 22) drehstarr mit der Eingangswelle (11) und deren zweite Kupplungshälften (30, 35) mit einer Welle (32) bzw. einer die Welle (32) umgebenden Hohlwelle (36) verbunden sind, und mit Schaltmitteln (16) zum wechselweisen Betätigen der Kupplungen (23, 24), um den Kraftfluß zwischen Eingangs- und Ausgangswelle (11, 13) alternativ über die erste Kupplung (23), die Welle (32) und einen ersten Satz Zahnradpaare (47/48, 53/60, 69/70, 74/77/78) oder über die zweite Kupplung (24), die Hohlwelle (36) und einen zweiten Satz Zahnradpaare (40/41, 47/48, 53/60, 68/65, 69/70, 74/77/78) zu führen, wobei in die über die Kupplungen (23, 24) laufenden Kraftflüsse Freiläufe (31, 42) eingeschaltet sind, derart, daß in jedem Gang jeweils ein Freilauf (31, 42) in den Kraftfluß eingeschaltet und der jeweils andere Freilauf (31, 42) nicht eingeschaltet ist, und die Freiläufe (31, 42) über Betätitungseinrichtungen (33, 43) in ihrer Freilauffunktion ein- bzw. ausschaltbar sind, weiterhin einer der Freiläufe (31) zwischen die zweite Kupplungshälfe (30) der ersten Kupplung (23) und die Welle (32) geschaltet ist, und ferner in jeden über die Kupplungen (23, 24) laufenden Kraftfluß jeweils nur ein gemeinsamer Freilauf (31, 42) eingeschaltet ist, der mit einer drehstarren Verbindung überbrückbar ist, wobei weiterhin die Verbindung eine zum Freilauf (31, 42) konzentrische dritte Kupplung aufweist, die axial betätigbar ist, dadurch gekennzeichnet, daß die axiale Betätigungskraft über in in die Welle (32) integriertes Getriebe mit radialen Übertragungsgliedern in eine axial gerichtete, aber außerhalb der Achse der Welle (32) bzw. Vorgelegewelle (15) an der dritten Kupplung angreifende Auslenkkraft umgesetzt wird.

2. Doppelkupplungsgetriebe nach Anspruch 1, dadurch gekennzeichnet, daß die Hohlwelle (36) über ein Zahnradpaar (40/41) eine Vorgelegewelle (15) antreibt und daß ein zweiter Freilauf (42) zwischen das mit der Vorgelegewelle (15) koaxiale Zahnrad (41) des Zahnradpaars (40/41) und die Vorgelegewelle (15) geschaltet ist.

3. Doppelkupplungsgetriebe nach Anspruch 2, dadurch gekennzeichnet, daß der Freilauf (42) am stirnseitigen Ende der Vorgelegewelle (15) angeordnet ist.

4. Doppelkupplungsgetriebe nach einem oder mehreren der Ansprüche 1 bis 3, dadurch gekennzeichnet, daß die dritte Kupplung über Federkraft betätigbar ist und daß die Federkraft von einer zur dritten Kupplung konzentrischen Tellerfeder (90; 129) erzeugt wird.

5. Doppelkupplungsgetriebe nach einem oder mehreren der Ansprüche 1 bis 4, dadurch gekennzeichnet, daß die dritte Kupplung mittels eines axial in einer Längsbohrung (171) der Welle (32) bzw. Vorgelegewelle (15) verschieblichen Kolbens (98; 139; 170) betätigbar ist.

6. Doppelkupplungsgetriebe nach einem oder mehreren der Ansprüche 1 bis 5, dadurch gekennzeichnet, daß das Getriebe einen zweiarmigen Hebel (95; 135) umfaßt, dessen eines Ende vom Kolben (98; 139) ausgelenkt wird und dessen anderes Ende eine Hälfte der dritten Kupplung axial auslenkt, oder das Getriebe beispielsweise ein radial bewegliches Element aufweist, dessen eines Ende über eine erste Keilfläche am Kolben (170) und dessen anderes Ende über eine zweite Keilfläche an einer Hälfte der dritten Kupplung anliegt, wobei das radial bewegliche Element ein Bolzen (163) mit Konussen (167, 168) an den Enden ist, die an einem Konus (169) des Kolbens (170) bzw. an einer Schrägfläche (166) der Hälfte der dritten Kupplung anliegen.

7. Doppelkupplungsgetriebe nach einem der Ansprüche 5 oder 6, dadurch gekennzeichnet, daß der Kolben (98; 139) seinerseits mittels einer Kolben-Zylinder-Einheit (101, 102; 145, 146) auslenkbar ist.

8. Doppelkupplungsgetriebe nach Anspruch 7, dadurch gekennzeichnet, daß die Kolben-Zylinder-Einheit (101, 102) mittels dynamischer oder statischer Druckölzuführung auslenkbar ist.

9. Doppelkupplungsgetriebe nach Anspruch 8, dadurch gekennzeichnet, daß die Kolben-Zylinder-Einheit (145, 146) gehäusefest angeordnet und der zylindrische Kolben (145) drehstarr gehalten ist und über Axiallager (153) unter Rollreibung am Kolben (139) axial anliegt.

10. Verfahren zum Einstellen eines Doppelkupplungsgetriebes (10) eines Kraftfahrzeugs, mit einer Eingangswelle (11) und einer Ausgangswelle (13), die über stirnradverzahnte und selektiv in Eingriff bringbare Zahnradpaare (40/41, 47/48, 53/60, 68/65, 69/70, 74/77/78) miteinander verbindbar sind, mit einer ersten und einer zweiten Kupplung (23, 24), deren erste Kupplungshälften (21, 22) drehstarr mit der Eingangswelle (11) und deren zweite Kupplungshälfen (30, 35) mit einer Welle (32) bzw. einer die Welle (32) umgebenden Hohlwelle (36) verbunden sind, und mit Schaltmitteln (16) zum Betätigen der Kupplungen (23, 24), um den Kraftfluß zwischen Eingangs- und Ausgangswelle (11, 13) in einem Gang über die erste Kupplung (23), die Welle (32), Schaltmuffen (51, 63, 72) und einen ersten Satz Zahnradpaare (47/48, 53/60, 69/70, 74/77/78) bzw. in einem benachbarten Gang über die zweite Kupplung (24), die Hohlwelle (36), Schaltmuffen (51, 63, 72) und einen zweiten Satz Zahnradpaare (40/41, 47/48, 53/60, 68/65, 69/70, 74/77/78) zu führen, dadurch gekennzeichnet, daß beim Anfahren des Kraftfahrzeuges die zugehörige eine Kupplung (24) und eine zugehörige Schaltmuffe (72) des einen Ganges und gleichzeitig die andere Kupplung (23) und eine Schaltmuffe (63, 72) eines weiteren, der anderen Kupplung (23) zugehörigen Ganges betätigt werden und daß dann, wenn die Ausgangsdrehzahl (n₃₂, n₃₆) der Kupplung (23, 24) eines der Gänge deren Eingangsdrehzahl (n₁₁) erreicht, der Kraftfluß in diesem Gang aufgetrennt wird.

11. Verfahren nach Anspruch 10, dadurch gekennzeichnet, daß die Gänge benachbart sind und daß der Kraftfluß im niedrigeren Gang aufgetrennt wird.

12. Verfahren nach einem oder beiden der Ansprüche 10 und 11, dadurch gekennzeichnet, daß zur Auftrennung des Kraftflusses ein Freilauf (31; 31b) verwendet wird.

13. Verfahren nach Anspruch 10, dadurch gekennzeichnet, daß die Eingangsdrehzahl (n₁₁) sowie die Ausgangsdrehzahl (n₃₂, n₃₆) erfaßt werden und daß bei Drehzahlgleichheit die Kupplung (23, 24) geöffnet wird.

## Claims

1. A double clutch gearbox with an input shaft (11) and an output shaft (13), which are connectable to one another via spur-toothed and selectively engageable gear pairs (40/41, 47/48, 53/60, 68/65, 69/70, 74/77/78), with a first and a second clutch (23, 24), the first clutch halves (21, 22) of which are connected in a torsionally rigid manner to the input shaft (11) and the second clutch halves (30, 35) of which are connected to a shaft (32) or a hollow shaft (36) enclosing the shaft (32), and with switching means (16) for alternately actuating the clutches (23, 24) in order to guide the flow of force between the input and output shaft (11, 13) alternately via the first clutch (23), the shaft (32) and a first set of gear pairs (47/48, 53/60, 69/70, 74/77/78) or via the second clutch (24), the hollow shaft (36) and a second set of gear pairs (40/41, 47/48, 53/60, 68/65, 69/70, 74/77/78), wherein free-wheels (31, 42) are engaged in the flows of force running via the clutches (23, 24) such that, in each gear, a free-wheel (31, 42) is engaged in the flow of force and the other free-wheel (31, 42), in each case, is not engaged, and the free-wheels (31, 42) are switchable to and from their free-wheel function via actuating devices (33, 43), and, in addition, one of the free-wheels (31) is connected between the second clutch half (30) of the first clutch (23) and the shaft (32), and furthermore only one common free-wheel (31, 42) is engaged in each flow of force running via the clutches (23, 24), said common free-wheel (31, 42) being by-passable with a torsionally rigid connection, wherein the connection also has a third clutch, concentric with the free-wheel (31, 42), which is axially actuatable, characterised in that the axial actuation force is converted into a deflection force, which is axially directed but is applied to the third clutch, outside the axis of the shaft (32) or back gear shaft (15), via a gearbox with radial transmission elements integrated into the shaft (32).

2. A double clutch gearbox according to claim 1, characterised in that the hollow shaft (36) drives a back gear shaft (15) via a gear pair (40/41) and that a second free-wheel (42) is connected between the gear (41) of the gear pair (40/41), which is coaxial with the back gear shaft (15), and the back gear shaft (15).

3. A double clutch gearbox according to claim 2, characterised in that the free-wheel (42) is arranged on the end of the back gear shaft (15) on the front side.

4. A double clutch gearbox according to one or more of claims 1 to 3, characterised in that the third clutch is actuatable via spring energy, and that the spring energy is generated by a disc spring (90; 129) which is concentric to the third clutch.

5. A double clutch gearbox according to one or more of claims 1 to 4, characterised in that the third clutch is actuatable by means of a piston (98; 139; 170) which is axially displaceable in a longitudinal hole (171) in the shaft (32) or back gear shaft (15).

6. A double clutch gearbox according to one or more of claims 1 to 5, characterised in that the gearbox comprises a two-armed lever (95; 135), one end of which is deflected by the piston (98; 139) and the other end of which axially deflects a half of the third clutch, or the gearbox has, for example, a radially movable element, one end of which lies against the piston (170) via a first tapered surface and the other end of which lies against a half of the third clutch via a second tapered surface, wherein the radially movable element is a bolt (163) with cones (167, 168) at each end, which lie against a cone (169) of the piston (170) or against an inclined surface (166) of the half of the third clutch.

7. A double clutch gearbox according to one of claims 5 or 6, characterised in that the piston (98; 139) is, in turn, deflectable by means of a piston/cylinder unit (101, 102; 145; 146).

8. A double clutch gearbox according to claim 7, characterised in that the piston/cylinder unit (101, 102) is deflectable by means of a dynamic or static pressure oil supply.

9. A double clutch gearbox according to claim 8, characterised in that the piston/cylinder unit (145, 146) is arranged fixed to the casing and the cylindrical piston (145) is held torsionally rigid and lies axially against the piston under rolling friction via thrust bearings (153).

10. A method of setting a double clutch gearbox (10) of a motor vehicle, with an input shaft (11) and an output shaft (13), which are connectable to one another via spur-toothed and selectively engageable gear pairs (40/41, 47/48, 53/60, 68/65, 69/70, 74/77/78), with a first and a second clutch (23, 24), the first clutch halves (21, 22) of which are connected in a torsionally rigid manner to the input shaft (11) and the second clutch halves (30, 35) of which are connected to a shaft (32) or a hollow shaft (36) enclosing the shaft (32), and with switching means (16) for actuating the clutches (23, 24) in order, in one gear, to guide the flow of force between the input and output shaft (11, 13), via the first clutch (23), the shaft (32), switching sleeves (51, 63, 72) and a first set of gear pairs (47/48, 53/60, 69/70, 74/77/78) or, in an adjacent gear, via the second clutch (24), the hollow shaft (36), switching sleeves (51, 63, 72) and a second set of gear pairs (40/41, 47/48, 53/60, 68/65, 69/70, 74/77/78), characterised in that, during starting of the motor vehicle, the one associated clutch (24) and an associated switching sleeve (72) of the one gear and, at the same time, the other clutch (23) and a switching sleeve (63, 72) of a further gear, associated with the other clutch (23), are actuated and that, when the output speed (n₃₂, n₃₆) of the clutch (23, 24) of one of the gears reaches its input speed (n₁₁), the flow of force in this gear is cut.

11. A method according to claim 10, characterised in that the gears are adjacent and that the flow of force in the lower gear is cut.

12. A method according to one or both of claims 10 and 11, characterised in that a free-wheel (31; 31b) is used to cut the flow of force.

13. A method according to claim 10, characterised in that the input speed (n₁₁) and the output speed (n₃₂, n₃₆) are measured and that, when the speeds are equal, the clutch (23, 24) is opened.

## Revendications

1. Transmission à embrayage double comprenant un arbre d'entrée (11) et un arbre de sortie (13), susceptibles d'être raccordés l'un à l'autre sélectivement par des couples de roues dentées (40/41, 47/48, 53/60, 68/65, 69/70, 74/77/78) à taille droite, un premier et un second embrayage (23, 24) dont les premières moitiés d'embrayage (21, 22) sont reliées fixes en rotation à l'arbre d'entrée (11) et dont les secondes moitiés d'embrayage (30, 35) sont reliées à un arbre (32) ou à un arbre creux (36) entourant l'arbre (32), et des dispositifs de changement de vitesse (16) pour l'actionnement réciproque des embrayages (23, 24), afin d'assurer le transfert de mouvement entre l'arbre d'entrée et l'arbre de sortie (11, 13) alternativement soit par le premier embrayage (23), l'arbre (32) et un premier couple de roues dentées (47/48, 53/60, 69/70, 74/77/78), soit par le second embrayage (24), l'arbre creux (36) et un second couple de roues dentées (40/41, 47/48, 53/60, 68/65, 69/70, 74/77/78), des dispositifs à roue libre (31, 42) étant mis en circuit dans les transferts de mouvement passant par les embrayages (23, 24), de telle sorte que dans chaque rapport, un dispositif à roue libre (31, 42) est mis en circuit dans le transfert de mouvement et que l'autre dispositif à roue libre (31, 42) n'est pas mis en circuit, et que les dispositifs à roue libre (31, 42) peuvent être mis en ou hors circuit dans leur fonction de roue libre par des dispositifs d'actionnement (33, 43) ; en outre l'un des dispositifs à roue libre (31) est mis en circuit entre la seconde moitié d'embrayage (30) du premier embrayage (23) et l'arbre (32), de plus dans chaque transfert de mouvement assuré par les embrayages (23, 24), seul est mis en circuit à chaque fois un dispositif à roue libre (31, 42) commun, qui peut être ponté avec une liaison fixe en rotation, la liaison présentant de plus un troisième embrayage concentrique au dispositif à roue libre (31, 42), actionnable axialement, caractérisée en ce que la force d'actionnement axiale est convertie par un engrenage intégré à l'arbre (32) avec des éléments de transmission radiaux, en une force de déviation dirigée axialement, appliquée au troisième embrayage, mais à l'extérieur de l'axe de l'arbre (32) ou arbre de renvoi (15).

2. Transmission à embrayage double selon la revendication 1, caractérisée en ce que l'arbre creux (36) entraîne un arbre de renvoi (15) par l'intermédiaire d'un couple de roues dentées (40/41) et en ce qu'un deuxième dispositif à roue libre (42) est mis en circuit entre l'arbre de renvoi (15) et la roue dentée (41) du couple de roues dentées (40, 41), qui est coaxiale à l'arbre de renvoi (15).

3. Transmission à embrayage double selon la revendication 2, caractérisée en ce que le dispositif à roue libre (42) est agencé à l'extrémité frontale de l'arbre de renvoi (15).

4. Transmission à embrayage double selon l'une ou plusieurs des revendications 1 à 3, caractérisée en ce que le troisième embrayage peut être actionné par une force élastique et en ce que la force élastique est exercée par une rondelle-ressort (90 ; 129) concentrique au troisième embrayage.

5. Transmission à embrayage double selon l'une ou plusieurs des revendications 1 à 4, caractérisée en ce que le troisième embrayage peut être actionné au moyen d'un piston (98 ; 139 ; 170) mobile axialement dans un alésage longitudinal (171) de l'arbre (32) ou de l'arbre de renvoi (15).

6. Transmission à embrayage double selon l'une ou plusieurs des revendications 1 à 5, caractérisée en ce que la transmission comprend un levier à deux bras (95 ; 135), dont une extrémité est déviée par le piston (98 ; 139) et dont l'autre extrémité dévie axialement une moitié du troisième embrayage, ou en ce que la transmission présente par exemple un élément mobile radialement, dont une extrémité repose sur une première surface conique du piston (170) et dont l'autre extrémité repose, par le biais d'une seconde surface conique, contre une moitié du troisième embrayage, l'élément mobile radialement étant un poussoir (163) doté de cônes (167, 168) à ses extrémités, qui reposent contre un cône (169) du piston (170) ou sur une surface inclinée (166) de la moitié du troisième embrayage.

7. Transmission à embrayage double selon l'une des revendications 5 ou 6, caractérisée en ce que le piston (98 ; 139) peut quant à lui être dévié au moyen d'une unité piston/cylindre (101, 102 ; 145, 146).

8. Transmission à embrayage double selon la revendication 7, caractérisée en ce que l'unité piston/cylindre (101, 102) peut être déviée à l'aide d'une alimentation dynamique ou statique d'huile hydraulique.

9. Transmission à embrayage double selon la revendication 8, caractérisée en ce que l'unité piston/cylindre (145, 146) est montée solidaire du carter et en ce que le piston cylindrique (145) est maintenu fixe en rotation et repose contre le piston (139) avec frottement de roulement par le biais d'un palier axial (153).

10. Méthode d'ajustage d'une transmission à embrayage double (10) d'un véhicule, comprenant un arbre d'entrée (11) et un arbre de sortie (13), susceptibles d'être raccordés l'un à l'autre sélectivement par des couples de roues dentées (40/41, 47/48, 53/60, 68/65, 69/70, 74/77/78) à taille droite, un premier et un second embrayage (23, 24) dont les premières moitiés d'embrayage (21, 22) sont reliées fixes en rotation à l'arbre d'entrée (11) et dont les secondes moitiés d'embrayage (30, 35) sont reliées à un arbre (32) ou à un arbre creux (36) entourant l'arbre (32), et des dispositifs de changement de vitesse (16) pour l'actionnement des embrayages (23, 24), afin d'assurer le transfert de mouvement entre l'arbre d'entrée et l'arbre de sortie (11, 13), dans un rapport, par le premier embrayage (23), l'arbre (32), des manchons coulissants (51, 63, 72) et un premier couple de roues dentées (47/48), 53/60, 69/70, 74/77/78) ou, dans un rapport voisin, par le second embrayage (24), l'arbre creux (36), des manchons coulissants (51, 63, 72) et un second couple de roues dentées (40/41, 47/48, 53/60, 68/65, 69/70, 74/77/78), caractérisée en ce que, lors du démarrage du véhicule, l'embrayage correspondant (24) et un manchon coulissant correspondant (72) d'un rapport et l'autre embrayage (23) ainsi qu'un manchon coulissant (63, 72) d'un autre rapport correspondant à l'autre embrayage (23) sont simultanément actionnés et en ce qu'ensuite, lorsque le régime de sortie (n₃₂, n₃₆) de l'embrayage (23, 24) d'un des rapports atteint le régime d'entrée (n₁₁) de celui-ci, le transfert de mouvement est interrompu dans ce rapport.

11. Méthode selon la revendication 10, caractérisée en ce que les rapports sont voisins et en ce que le transfert de mouvement est interrompu dans le rapport le plus bas.

12. Méthode selon l'une ou les deux revendications 10 et 11, caractérisée en ce qu'un dispositif à roue libre (31 ; 31b) est utilisé pour l'interruption du transfert de mouvement.

13. Méthode selon la revendication 10, caractérisée en ce que le régime d'entrée (n₁₁) ainsi que le régime de sortie (n₃₂, n₃₆) sont détectés et en ce que lorsque ces régimes sont égaux, l'embrayage (23, 24) est débrayé.
